(19) Europäisches Patentamt European Patent Office Office européen des brevets

(11) **EP 4 565 069 B1**

(12) **EUROPEAN PATENT SPECIFICATION**

(45) Date of publication and mention of the grant of the patent:
**29.04.2026 Bulletin 2026/18**

(21) Application number: **23755144.5**

(22) Date of filing: **31.07.2023**

(51) International Patent Classification (IPC):
*A23C 9/13* *(2006.01)*   *A23C 9/137* *(2006.01)*
*A23C 9/152* *(2006.01)*   *A23C 9/154* *(2006.01)*
*A23L 23/00* *(2016.01)*   *A23L 27/60* *(2016.01)*
*A23L 27/00* *(2016.01)*   *A23L 29/269* *(2016.01)*
*A23L 29/281* *(2016.01)*

(52) Cooperative Patent Classification (CPC):
**A23C 9/1526; A23C 9/1315; A23C 9/137;**
**A23C 9/154; A23L 23/00; A23L 27/60; A23L 27/88;**
**A23L 29/269; A23L 29/281**

(86) International application number:
**PCT/GB2023/052017**

(87) International publication number:
**WO 2024/028584 (08.02.2024 Gazette 2024/06)**

(54) **FORMULATION**

FORMULIERUNG

FORMULATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.08.2022 GB 202211203**
**07.02.2023 GB 202301737**

(43) Date of publication of application:
**11.06.2025 Bulletin 2025/24**

(73) Proprietor: **University of Leeds**
**Leeds, Yorkshire LS2 9JT (GB)**

(72) Inventors:
• SARKAR, Anwesha
  Leeds Woodhouse Lane Leeds Yorkshire LS2 9JT (GB)
• KEW, Ben Jorden
  Leeds Woodhouse Lane Leeds Yorkshire LS2 9JT (GB)
• MU, Mingduo
  Leeds Woodhouse Lane Leeds Yorkshire LS2 9JT (GB)
• PABOIS, Olivia
  Leeds Woodhouse Lane Leeds Yorkshire LS2 9JT (GB)
• ZHANG, Shuning
  Leeds Woodhouse Lane Leeds Yorkshire LS2 9JT (GB)

(74) Representative: **HGF**
**HGF Limited**
**4th Floor, 1 City Square**
**Leeds LS1 2ES (GB)**

(56) References cited:
**WO-A1-2021/234386**

• HU JING ET AL: "Supporting Information Synergistic Microgel-Reinforced Hydrogels as High-Performance Lubricants", ACS MACRO LETTERS, 15 December 2020 (2020-12-15), pages S - 1, XP093093093, Retrieved from the Internet <URL:https://pubs.acs.org/doi/10.1021/acsmacrolett.0c00689?goto=supporting-info> [retrieved on 20231019]

EP 4 565 069 B1

• HU JING ET AL: "Synergistic Microgel-Reinforced Hydrogels as High-Performance Lubricants", ACS MACRO LETTERS, vol. 9, no. 12, 15 December 2020 (2020-12-15), pages 1726 - 1731, XP055833501, ISSN: 2161-1653, Retrieved from the Internet <URL:http://pubs.acs.org/doi/pdf/10.1021/acsmacrolett.0c00689> DOI: 10.1021/acsmacrolett.0c00689

## Description

This invention relates to a food product comprising an additive formulation, the additive formulation comprising a proteinaceous microgel and a biopolymeric hydrogel. The invention also relates to methods for preparing such food products. The invention also relates to a use of an additive formulation as a fat replacement the additive formulation comprising a proteinaceous microgel and a biopolymeric hydrogel.

## BACKGROUND

Obesity is a serious form of malnutrition that leads to increased risk of serious chronic conditions, including diabetes mellitus, cardiovascular disease, hypertension, and cancer, leading to premature death. Reducing calorie-dense fats and oils in foods and beverages is considered as one of the promising nutritional strategies to decrease calorie intake significantly (Kew, B.; Holmes, M.; Stieger, M.; Sarkar, A., Review on fat replacement using protein-based microparticulated powders or microgels: A textural perspective. Trends in Food Science & Technology 2020, 106, 457-468) and consequently, low-fat versions of foods designed with fat replacer technologies have been populating the supermarket shelves in the last two decades. The global fat replacer market is predicted to grow at a CAGR of 6.2% over the next five years, reaching almost €2.4 billion by 2025 (MarketandMarket.com) contributing to the low calorie food market, which is anticipated to rise up to approximately E24 billion by the end of 2027 (PersistenceMarketResearch.com), largely fuelled by enhanced public awareness for healthier reduced-fat foods and likely stricter food-related regulations. However, the commercial fat replacer industry suffers from severe technological challenges as the low fat products designed using the currently marketed fat replacers are inferior in taste, texture and fail to emulate the organoleptic properties mouthfeel of the full fat foods and thus do not thrive in the marketplace. Often certain fat replacers produce unpleasant astringent aftertaste which leads to consumer rejection (Tianqi Fang, Xue Shen, Juncai Hou, Mingruo Guo, Effects of polymerized whey protein prepared directly from cheese whey as fat replacer on physiochemical, texture, microstructure and sensory properties of low-fat set yogurt, LWT, Volume 115, 2019, 108268). Particularly for plant-based alternatives/ analogues to various foods and beverages which are on rise due to increased veganism and sustainability initiatives, often high concentrations of calorie-dense fat is added to reduce astringency and improve mouthfeel, making the food unhealthy and thus there is interests in reducing astringency in these foods without adding high levels of lipids in the form of fats and oils (Frances N. Brown, Alan R. Mackie, Qi He, Alison Branch, Anwesha Sarkar, Food Funct., 2021,12, 3324-3351.

The key reason for such poor taste and textural performance is that the fabrication of fat replacers has been based on mimicking "rheology" and shear-thinning behaviour of fat emulsion droplets and adding some flavouring as a "gold standard" design input (Laguna, L.; Farrell, G.; Bryant, M.; Morina, A.; Sarkar, A., Relating rheology and tribology of commercial dairy colloids to sensory perception. Food & Function 2017, 8 (2), 563-573; and Torres, I. C.; Amigo, J. M.; Knudsen, J. C.; Tolkach, A.; Mikkelsen, B. Ø.; Ipsen, R., Rheology and microstructure of low-fat yoghurt produced with whey protein microparticles as fat replacer. International Dairy Journal 2018, 81, 62-71) and has erroneously failed to consider the important surface properties, *i.e.* oral lubrication aspects. Rheology is not static. The viscosity of fat emulsions changes by orders of magnitude when exposed to the oral cavity, and becomes largely tribology-dominant (put simply, friction and lubrication-dependent), factors which are ignored in the rheology-design approach when fabricating fat replacers. Hence, it is inevitable that the fat replacers do not mimic the lubrication and mouthfeel performance of full fat-based emulsions, which is a key factor limiting the growth of the global fat replacers market. To date, there has been no feasible commercial/ academic solution to address this challenge.

The present invention offers a novel and pertinent solution to this problem

EP 0630580 discloses microparticulated suspensions containing oil as a coating in the surface. The presence of oil in the system may cause agglomeration, handling issues due to the presence of surface oil and also cause oxidative rancidity (Carvalho da Silva, Food Technol Biotechnol., 2022, 60, 3, 308-320). Further, a surface coating of oil on the surface of the microparticle may lead to detrimental effects such as reduced reconstitution (Fäldt & Bergenståhl, Food Hydrocolloids, 1996, 10, 4, pages 431-439; Millqvist-Fureby et al., Colloids Surf B: Biointerfaces, 2001, 21, 1-3, pages 47-58), faster expiration due to higher degree of lipid oxidation (Granelli et al., Journal of Science of Food and Agriculture, 1996, 71, 1, pages 75-82) and greater stickiness and thus handling issues (Nijdam et al., Journal of Food Engineering, 2006, 77, 4, pages 919-925). Additionally, the requirement of extra oil limits the applicability of these compositions. For example, the addition of oil into certain foods (such as dairy products) may lead to regulatory issues with regards to product labelling (Lee et al., Journal of Food and Drug Analysis, 26, 2, 2018, pages 469-480). WO 2021/234386 A1 discloses an oil-free additive formulation, the oil-free additive formulation comprising: (i) a proteinaceous microgel; and (ii) a biopolymeric hydrogel; wherein either one of: (i) the proteinaceous microgel; and (ii) the biopolymeric hydrogel is positively charged, and the other is negatively charged; wherein the biopolymeric hydrogel is associated with an outer surface of the oppositely charged proteinaceous microgel and food products comprising said additive in a concentration of about 5 to about 90%.

The present invention avoids the presence of additional oil in fat replacer compositions.

## BRIEF SUMMARY OF THE DISCLOSURE

The present invention relates to food products including an additive formulation as a substitute for fat content. The food products of the invention having a substitute for fat content may be indistinguishable from food products having "full-fat" content, i.e. without including the additive formulation. The food products of the invention may have reduced astringency as compared with food products without the additive formulation. The food products of the invention may have improved mouthfeel as compared with food products without the additive formulation.

In a first aspect of the present invention, there is provided a food product according to claim 1.

In a second aspect of the present invention, there is provided a method for preparing a food product of the first aspect, according to claim 13.

In a third aspect of the invention, there is provided a use of an additive formulation as a fat replacement in a food product in a concentration of from about 0.01% to less than 5% by weight of the food product, the additive formulation comprising:

a proteinaceous microgel; and
a biopolymeric hydrogel;

wherein either one of: (i) the proteinaceous microgel; and (ii) the biopolymeric hydrogel is positively charged, and the other is negatively charged; wherein the biopolymeric hydrogel is associated with an outer surface of the oppositely charged proteinaceous microgel.

The food products described herein may be used as a medical food product and also for parenteral nutrition. For example, the food products described herein may be helpful in increasing the nutrient intake in patients with various forms of oral insufficiencies and swallowing disorders, including patients having a disease or condition selected from obesity, cardiovascular diseases, hyperlipedemia, dry mouth, salivary gland diseases and disorders, chronic inflammatory autoimmune diseases, Sjögren's syndrome, xerostomia, endocrine diseases, dysphagia, diabetes, neurologic diseases and disorders, psychogenic diseases, anxiety, nervousness, aging, cancers, HIV/AIDS and polypharmacy.

## BRIEF DESCRIPTION OF THE DRAWINGS

Embodiments of the invention are further described hereinafter with reference to the accompanying drawings, in which:

Figure 1 shows the shear viscosity as a function of shear rates of the exemplary recipes of a yoghurt of the invention.

Figure 2 shows (A) the friction coefficient as a function of entrainment speeds obtained for the exemplary recipes of a yoghurt of the invention, and (B) a zoomed image of Figure 2A showing the boundary and mixed regime of tribology with Y axis shown in linear scale. No significant difference in friction between the reference yoghurt and 50% FR-L was observed, irrespective of entrainment speed *(p > 0.05)*.

Figure 3 shows the shear viscosity as a function of shear rates of exemplary recipes of roux/white sauce of the invention.

Figure 4 shows (A) the friction coefficient as a function of entrainment speeds obtained for the exemplary recipes of roux/white sauce, and (B) a zoomed image of Figure 4A showing the boundary and mixed regime of tribology with Y axis shown in linear scale. No significant difference in friction between the reference roux and 50% FR-L was observed, irrespective of entrainment speed *(p > 0.05)*.

Figure 5 shows the shear viscosity as a function of shear rates of exemplary recipes of vegetable soup made with roux/white sauce of the invention.

Figure 6 shows (A) the friction coefficient as a function of entrainment speeds obtained for exemplary recipes of vegetable soup made with roux/white sauce of the invention, and (B) a zoomed image of Figure 6A showing the boundary and mixed regime of tribology with Y axis shown in linear scale. No significant difference in friction between the reference vegetable soup made with roux/white sauce and 50% FR-L was observed, irrespective of entrainment speed *(p > 0.05)*.

Figure 7 shows the shear viscosity as a function of shear rates of exemplary recipes of vegetable soup made with double cream of the invention.

Figure 8 shows (A) the friction coefficient as a function of entrainment speeds obtained for exemplary recipes of vegetable soup made with double cream, and (B) zoomed image of Figure 8A showing the boundary and mixed regime of tribology with Y axis shown in linear scale. No significant difference in friction between reference vegetable soup made with double cream 25% FR-L and 50% FR-L was observed, irrespective of entrainment speed *(p > 0.05).*

Figure 9 shows the shear viscosity as a function of shear rates of exemplary recipes of pea protein liquid emulsions (i.e. plant milk) of the invention.

Figure 10 shows (A) the friction coefficient as a function of entrainment speeds obtained for the exemplary recipes of pea protein liquid emulsions (i.e. plant milk) and (B) zoomed image of Figure 10A showing the boundary and mixed regime of tribology with Y axis shown in linear scale. No significant difference in friction between reference pea protein liquid emulsions (i.e. plant milk) and 50% FR-L was observed, irrespective of entrainment speed *(p > 0.05).*

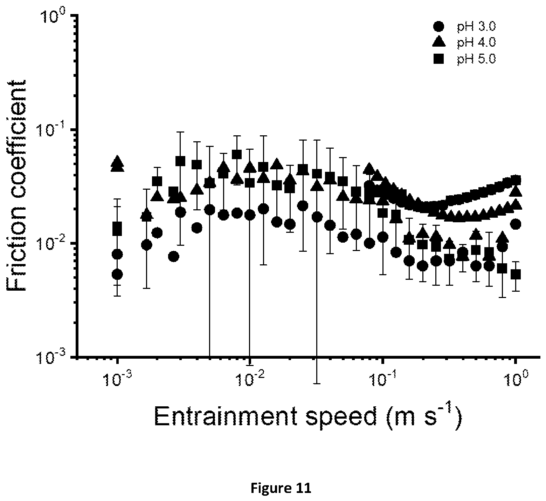

Figure 11 shows the friction coefficient as a function of entrainment speed obtained for an additive formulation of xanthan gum hydrogel and potato protein microgel obtained from tribology measurements performed at a constant temperature of 37 °C on as a function of pH.

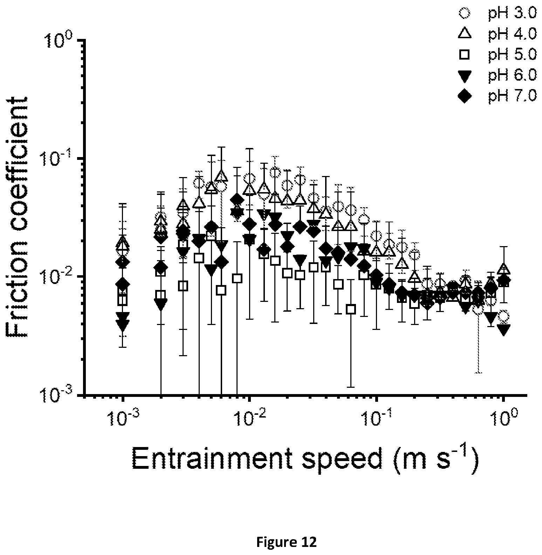

Figure 12 shows the friction coefficient as a function of entrainment speed obtained for an additive formulation of xanthan gum hydrogel and lactoferrin microgel obtained from tribology measurements performed at a constant temperature of 37 °C on as a function of pH.

## DETAILED DESCRIPTION

The abbreviations used herein have their conventional meaning within the chemical and biological arts.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

The reader's attention is directed to all papers and documents which are filed concurrently with or previous to this specification in connection with this application and which are open to public inspection with this specification, and the contents of all such papers and documents are incorporated herein by reference.

For the avoidance of doubt, it is hereby stated that the information disclosed earlier in this specification under the heading "Background" is relevant to the invention and is to be read as part of the disclosure of the invention.

### *Definitions*

The term 'microgel' includes a particle of gel of any shape with an equivalent diameter of approximately 0.1 to 100 µm.

The term 'biopolymeric hydrogel' includes a tubular-shaped structure of any polymer, i.e. fibrils of the polymer.

The term 'colloidosome' includes a core-shell system having a colloidal core and a shell composed of colloidal particles or fibrils.

The term 'base food' refers to any orally or parenterally consumed food product in any form, including liquid beverages, soups, semi-solid foods etc. which can be consumed by a human or an animal. In other words, 'base food' relates to any food product that does not include the additive formulation described herein.

The term 'oil-free' refers to a formulation, composition, mixture or food product which does not include any saturated or unsaturated lipid components. The absence of oil in the formulation may lead to the reduction and/or avoidance of agglomeration issues; and/or the reduction and/or avoidance of handling issues; and/or the reduction and/or avoidance of oxidative rancidity; and/or the lengthening of shelf-life. The absence of oil in the formulation allows the application of the formulation in a broad range of food products (where the presence of oil would lead to regulatory issues with regards to product labelling).

*Food Product*

The food product may be a liquid food product, i.e. a food product comprising predominantly liquid fat. For example, the food product may be selected from: milk, yoghurt, yoghurt drinks, cream, roux, dressings, sauces, mousses, mayonnaise, ice creams, coffee creamers, chilled and frozen desserts such as dulce du leche, caramel custard, pralines, margarine, cheese, soup, plant milks, spreads, dips, smoothies, pasteurized UHT milk, foams, emulsions, sweet condensed milk, evaporated milk, fermented milks, milk-based fermented products, emulsions, fermented cereal based drinks, infant formula, geriatric nutrition, medical food, parenteral nutrition, performance nutrition, sports nutrition, meal replacements, frozen foods, culinary aids, curries, broths, gravies, cereal drinks, fortified diets and oral supplements, pet food, liquid and thickened suspensions, vegan mouse, vegan cheese, and vegan mayonnaise.

The food product may be a dairy food product. For example, the food product may be selected from: milk, yoghurt, yoghurt drinks, cream, roux, dressings, sauces, mousses, mayonnaise, ice creams, coffee creamers, chilled and frozen desserts such as dulce du leche, caramel custard, pralines, margarine, cheese, soup, spreads, dips and smoothies, pasteurized UHT milk, foams, emulsions, sweet condensed milk, evaporated milk, fermented milks, milk-based fermented products, emulsions, fermented cereal based drinks, infant formula, geriatric nutrition, medical food, parenteral nutrition, performance nutrition, sports nutrition, meal replacements, frozen foods, culinary aids, curries, broths, gravies, cereal drinks, fortified diets and oral supplements, pet food, liquid and thickened suspensions.

The food product may be a dairy food product (i.e. a product containing or made from milk). The fat in the dairy food product is dairy fat (i.e. of a dairy origin). For example, the dairy food product may be selected from: milk, yoghurt, yoghurt drinks, cream, milk fat-based dressings, dairy fat spreads, butter, milk fat-based mousses, ice creams, milk fat-based coffee creamers, chilled and frozen milk desserts such as dulce du leche, caramel custard, cheese, milk fat-based soups, milk- or yoghurt-based based smoothies, pasteurized UHT milk, sweet condensed milk, evaporated milk, fermented milks, milk-based fermented products, infant formula containing milk fat, milk fat-based frozen foods, milk-based culinary aids, fortified diets and dairy-based oral nutritional supplements, and thickened milk suspensions.

The dairy food product may be selected from: milk, yoghurt, yoghurt drinks, cream, milk fat-based mousses, ice creams, milk fat-based coffee creamers, chilled and frozen milk desserts such as dulce du leche, milk fat-based soups, milk- or yoghurt-based smoothies, pasteurized UHT milk, sweet condensed milk, evaporated milk, fermented milks, milk-based fermented products, infant formula containing milk fat, milk fat-based frozen foods, milk-based culinary aids, fortified diets and dairy-based oral nutritional supplements, and thickened milk suspensions.

The dairy food product may be selected from: milk, yoghurt, yoghurt drinks, cream, milk fat-based mousses, ice creams, milk fat-based coffee creamers, milk fat-based soups, milk- or yoghurt-based smoothies, pasteurized UHT milk, sweet condensed milk, evaporated milk, fermented milks, milk-based fermented products, infant formula containing milk fat, milk fat-based frozen foods, and thickened milk suspensions.

The dairy food product may be selected from: milk, yoghurt, yoghurt drinks, cream, milk fat-based coffee creamers, milk fat-based soups, milk- or yoghurt-based smoothies, pasteurized UHT milk, sweet condensed milk, evaporated milk, fermented milks, milk-based fermented products, infant formula containing milk fat, and thickened milk suspensions.

The dairy food product may be selected from: milk, yoghurt, yoghurt drinks, milk- or yoghurt-based smoothies, pasteurized UHT milk, sweet condensed milk, evaporated milk, fermented milks, milk-based fermented products, and infant formula containing milk fat

The food product may be selected from: roux, dressings, sauces, mayonnaise, pralines, margarine, soup, spreads, dips, foams, emulsions, fermented cereal based drinks, geriatric nutrition, medical food, parenteral nutrition, performance nutrition, sports nutrition, meal replacements, frozen foods, culinary aids, curries, broths, gravies, cereal drinks, fortified diets and oral supplements, pet food, liquid and thickened suspensions, vegan mouse, vegan cheese, and vegan mayonnaise.

The food product is selected from: roux, dressings, sauces, soup, dips, broths, gravies, liquid and thickened suspensions and comprises the oil-free additive formulation in a concentration of from about 0.01% to less than 5% by weight.

The food product may be selected from: roux, sauces, soup (e.g. soup made from roux or soup made from cream), broths, and gravies.

The food product may be a plant-based food product. For example, the food product may be selected from: plant-based milks, plant based alternatives of conventional products such as vegan mousse, vegan cheese, vegan sauces, vegan dressings, vegan frozen foods, vegan pet foods, vegan mayonnaise, etc. The food product may be selected from: plant-based milks, nut milks, plant-based emulsions, plant based alternatives of conventional products such as vegan mousse, vegan cheese, vegan sauces, vegan dressings, vegan frozen foods, vegan pet foods, vegan mayonnaise etc.

The food product may be a food product having a pH of less than about 7, optionally less than about 4.8. For example, the food product may be selected from: acidified milk, acidified vegan milk, yoghurt, vegan yoghurt, roux, vegan roux, acidified salad dressings, vegan salad dressings, yoghurt drinks, vegan yoghurt drinks, yoghurt-based smoothies, milk-based fermented products, and plant-based fermented products. The food product may be selected from: acidified milk, yoghurt, roux, acidified salad dressings, yoghurt drinks, yoghurt-based smoothies and milk-based fermented products. The food product may be selected from: acidified milk, yoghurt, roux, yoghurt drinks, yoghurt-based smoothies and milk-based fermented products.

In embodiments, the food product comprises the additive formulation in a concentration of from about 0.02% to less than 5% by weight. In embodiments, the food product comprises the additive formulation in a concentration of from about 0.03% to less than 5% by weight. In embodiments, the food product comprises the additive formulation in a concentration of from about 0.04% to less than 5% by weight. In embodiments, the food product comprises the additive formulation in a concentration of from about 0.05% to less than 5% by weight. In embodiments, the food product comprises the additive formulation in a concentration of from about 0.06% to less than 5% by weight. In embodiments, the food product comprises the additive formulation in a concentration of from about 0.07% to less than 5% by weight. In embodiments, the food product comprises the additive formulation in a concentration of from about 0.08% to less than 5% by weight. In embodiments, the food product comprises the additive formulation in a concentration of from about 0.09% to less than 5% by weight.

In embodiments, the food product comprises the additive formulation in a concentration of from about 0.01% to about 4.5% by weight. In embodiments, the food product comprises the additive formulation in a concentration of from about 0.02% to about 4.5% by weight. In embodiments, the food product comprises the additive formulation in a concentration of from about 0.03% to about 4.5% by weight. In embodiments, the food product comprises the additive formulation in a concentration of from about 0.04% to about 4.5% by weight. In embodiments, the food product comprises the additive formulation in a concentration of from about 0.05% to about 4.5% by weight. In embodiments, the food product comprises the additive formulation in a concentration of from about 0.06% to about 4.5% by weight. In embodiments, the food product comprises the additive formulation in a concentration of from about 0.07% to about 4.5% by weight. In embodiments, the food product comprises the additive formulation in a concentration of from about 0.08% to about 4.5% by weight. In embodiments, the food product comprises the additive formulation in a concentration of from about 0.09% to about 4.5% by weight. In embodiments, the food product comprises the additive formulation in a concentration of from about 0.1% to about 4.5% by weight.

In embodiments, the food product comprises the additive formulation in a concentration of from about 0.01% to about 4% by weight. In embodiments, the food product comprises the additive formulation in a concentration of from about 0.02% to about 4% by weight. In embodiments, the food product comprises the additive formulation in a concentration of from about 0.03% to about 4% by weight. In embodiments, the food product comprises the additive formulation in a concentration of from about 0.04% to about 4% by weight. In embodiments, the food product comprises the additive formulation in a concentration of from about 0.05% to about 4% by weight. In embodiments, the food product comprises the additive formulation in a concentration of from about 0.06% to about 4% by weight. In embodiments, the food product comprises the additive formulation in a concentration of from about 0.07% to about 4% by weight. In embodiments, the food product comprises the additive formulation in a concentration of from about 0.08% to about 4% by weight. In embodiments, the food product comprises the additive formulation in a concentration of from about 0.09% to about 4% by weight. In embodiments, the food product comprises the additive formulation in a concentration of from about 0.1% to about 4% by weight.

In embodiments, the food product comprises the additive formulation in a concentration of from about 0.01% to about 3.5% by weight. In embodiments, the food product comprises the additive formulation in a concentration of from about 0.02% to about 3.5% by weight. In embodiments, the food product comprises the additive formulation in a concentration of from about 0.03% to about 3.5% by weight. In embodiments, the food product comprises the additive formulation in a concentration of from about 0.04% to about 3.5% by weight. In embodiments, the food product comprises the additive formulation in a concentration of from about 0.05% to about 3.5% by weight. In embodiments, the food product comprises the additive formulation in a concentration of from about 0.06% to about 3.5% by weight. In embodiments, the food product comprises the additive formulation in a concentration of from about 0.07% to about 3.5% by weight. In embodiments, the food product comprises the additive formulation in a concentration of from about 0.08% to about 3.5% by weight. In embodiments, the food product comprises the additive formulation in a concentration of from about 0.09% to about 3.5% by weight. In embodiments, the food product comprises the additive formulation in a concentration of from about 0.1% to about 3.5% by weight.

In embodiments, the food product comprises the additive formulation in a concentration of from about 0.01% to about 3% by weight. In embodiments, the food product comprises the additive formulation in a concentration of from about 0.02% to about 3% by weight. In embodiments, the food product comprises the additive formulation in a concentration of from about 0.03% to about 3% by weight. In embodiments, the food product comprises the additive formulation in a concentration of from about 0.04% to about 3% by weight. In embodiments, the food product comprises the additive formulation in a concentration of from about 0.05% to about 3% by weight. In embodiments, the food product comprises the additive formulation in a concentration of from about 0.06% to about 3% by weight. In embodiments, the food product comprises the additive formulation in a concentration of from about 0.07% to about 3% by weight. In embodiments, the food product comprises the additive formulation in a concentration of from about 0.08% to about 3% by weight. In embodiments, the food product comprises the additive formulation in a concentration of from about 0.09% to about 3% by weight. In embodiments, the food product comprises the additive formulation in a concentration of from about 0.1% to about 3% by weight.

In embodiments, the food product comprises the additive formulation in a concentration of from about 0.01% to about 2.5% by weight. In embodiments, the food product comprises the additive formulation in a concentration of from about 0.02% to about 2.5% by weight. In embodiments, the food product comprises the additive formulation in a concentration of from about 0.03% to about 2.5% by weight. In embodiments, the food product comprises the additive formulation in a concentration of from about 0.04% to about 2.5% by weight. In embodiments, the food product comprises the additive formulation in a concentration of from about 0.05% to about 2.5% by weight. In embodiments, the food product comprises the additive formulation in a concentration of from about 0.06% to about 2.5% by weight. In embodiments, the food product comprises the additive formulation in a concentration of from about 0.07% to about 2.5% by weight. In embodiments, the food product comprises the additive formulation in a concentration of from about 0.08% to about 2.5% by weight. In embodiments, the food product comprises the additive formulation in a concentration of from about 0.09% to about 2.5% by weight. In embodiments, the food product comprises the additive formulation in a concentration of from about 0.1% to about 2.5% by weight.

In embodiments, the food product comprises the additive formulation in a concentration of from about 0.01% to about 2% by weight. In embodiments, the food product comprises the additive formulation in a concentration of from about 0.02% to about 2% by weight. In embodiments, the food product comprises the additive formulation in a concentration of from about 0.03% to about 2% by weight. In embodiments, the food product comprises the additive formulation in a concentration of from about 0.04% to about 2% by weight. In embodiments, the food product comprises the additive formulation in a concentration of from about 0.05% to about 2% by weight. In embodiments, the food product comprises the additive formulation in a concentration of from about 0.06% to about 2% by weight. In embodiments, the food product comprises the additive formulation in a concentration of from about 0.07% to about 2% by weight. In embodiments, the food product comprises the additive formulation in a concentration of from about 0.08% to about 2% by weight. In embodiments, the food product comprises the additive formulation in a concentration of from about 0.09% to about 2% by weight. In embodiments, the food product comprises the additive formulation in a concentration of from about 0.1% to about 2% by weight.

In embodiments, the food product comprises the additive formulation in a concentration of from about 0.1% to less than 5% by weight. In embodiments, the food product comprises the additive formulation in a concentration of from about 0.2% to less than 5% by weight. In embodiments, the food product comprises the additive formulation in a concentration of from about 0.3% to less than 5% by weight. In embodiments, the food product comprises the additive formulation in a concentration of from about 0.4% to less than 5% by weight. In embodiments, the food product comprises the additive formulation in a concentration of from about 0.5% to less than 5% by weight. In embodiments, the food product comprises the additive formulation in a concentration of from about 0.6% to less than 5% by weight. In embodiments, the food product comprises the additive formulation in a concentration of from about 0.7% to less than 5% by weight. In embodiments, the food product comprises the additive formulation in a concentration of from about 0.8% to less than 5% by weight. In embodiments, the food product comprises the additive formulation in a concentration of from about 0.9% to less than 5% by weight. In embodiments, the food product comprises the additive formulation in a concentration of from about 1% to less than 5% by weight.

In embodiments, the food product comprises the additive formulation in a concentration of from about 0.1% to about 4.5% by weight. In embodiments, the food product comprises the additive formulation in a concentration of from about 0.2% to about 4.5% by weight. In embodiments, the food product comprises the additive formulation in a concentration of from about 0.3% to about 4.5% by weight. In embodiments, the food product comprises the additive formulation in a concentration of from about 0.4% to about 4.5% by weight. In embodiments, the food product comprises the additive formulation in a concentration of from about 0.5% to about 4.5% by weight. In embodiments, the food product comprises the additive formulation in a concentration of from about 0.6% to about 4.5% by weight. In embodiments, the food product comprises the additive formulation in a concentration of from about 0.7% to about 4.5% by weight. In embodiments, the food product comprises the additive formulation in a concentration of from about 0.8% to about 4.5% by weight. In embodiments, the food product comprises the additive formulation in a concentration of from about 0.9% to about 4.5% by weight. In embodiments, the food product comprises the additive formulation in a concentration of from about 1% to about 4.5% by weight.

In embodiments, the food product comprises the additive formulation in a concentration of from about 0.1% to about 4% by weight. In embodiments, the food product comprises the additive formulation in a concentration of from about 0.2% to about 4% by weight. In embodiments, the food product comprises the additive formulation in a concentration of from about 0.3% to about 4% by weight. In embodiments, the food product comprises the additive formulation in a concentration of from about 0.4% to about 4% by weight. In embodiments, the food product comprises the additive formulation in a concentration of from about 0.5% to about 4% by weight. In embodiments, the food product comprises the additive formulation in a concentration of from about 0.6% to about 4% by weight. In embodiments, the food product comprises the additive formulation in a concentration of from about 0.7% to about 4% by weight. In embodiments, the food product comprises the additive formulation in a concentration of from about 0.8% to about 4% by weight. In embodiments, the food product comprises the additive formulation in a concentration of from about 0.9% to about 4% by weight. In embodiments, the food product comprises the additive formulation in a concentration of from about 1% to about 4% by weight.

In embodiments, the food product comprises the additive formulation in a concentration of from about 0.1% to about 3.5% by weight. In embodiments, the food product comprises the additive formulation in a concentration of from about 0.2% to about 3.5% by weight. In embodiments, the food product comprises the additive formulation in a concentration of from about 0.3% to about 3.5% by weight. In embodiments, the food product comprises the additive formulation in a concentration of from about 0.4% to about 3.5% by weight. In embodiments, the food product comprises the additive formulation in a concentration of from about 0.5% to about 3.5% by weight. In embodiments, the food product comprises the additive formulation in a concentration of from about 0.6% to about 3.5% by weight. In embodiments, the food product comprises the additive formulation in a concentration of from about 0.7% to about 3.5% by weight. In embodiments, the food product comprises the additive formulation in a concentration of from about 0.8% to about 3.5% by weight. In embodiments, the food product comprises the additive formulation in a concentration of from about 0.9% to about 3.5% by weight. In embodiments, the food product comprises the additive formulation in a concentration of from about 1% to about 3.5% by weight.

In embodiments, the food product comprises the additive formulation in a concentration of from about 0.1% to about 3% by weight. In embodiments, the food product comprises the additive formulation in a concentration of from about 0.2% to about 3% by weight. In embodiments, the food product comprises the additive formulation in a concentration of from about 0.3% to about 3% by weight. In embodiments, the food product comprises the additive formulation in a concentration of from about 0.4% to about 3% by weight. In embodiments, the food product comprises the additive formulation in a concentration of from about 0.5% to about 3% by weight. In embodiments, the food product comprises the additive formulation in a concentration of from about 0.6% to about 3% by weight. In embodiments, the food product comprises the additive formulation in a concentration of from about 0.7% to about 3% by weight. In embodiments, the food product comprises the additive formulation in a concentration of from about 0.8% to about 3% by weight. In embodiments, the food product comprises the additive formulation in a concentration of from about 0.9% to about 3% by weight. In embodiments, the food product comprises the additive formulation in a concentration of from about 1% to about 3% by weight.

In embodiments, the food product comprises the additive formulation in a concentration of from about 0.1% to about 2.5% by weight. In embodiments, the food product comprises the additive formulation in a concentration of from about 0.2% to about 2.5% by weight. In embodiments, the food product comprises the additive formulation in a concentration of from about 0.3% to about 2.5% by weight. In embodiments, the food product comprises the additive formulation in a concentration of from about 0.4% to about 2.5% by weight. In embodiments, the food product comprises the additive formulation in a concentration of from about 0.5% to about 2.5% by weight. In embodiments, the food product comprises the additive formulation in a concentration of from about 0.6% to about 2.5% by weight. In embodiments, the food product comprises the additive formulation in a concentration of from about 0.7% to about 2.5% by weight. In embodiments, the food product comprises the additive formulation in a concentration of from about 0.8% to about 2.5% by weight. In embodiments, the food product comprises the additive formulation in a concentration of from about 0.9% to about 2.5% by weight. In embodiments, the food product comprises the additive formulation in a concentration of from about 1% to about 2.5% by weight.

In embodiments, the food product comprises the additive formulation in a concentration of from about 0.1% to about 2% by weight. In embodiments, the food product comprises the additive formulation in a concentration of from about 0.2% to about 2% by weight. In embodiments, the food product comprises the additive formulation in a concentration of from about 0.3% to about 2% by weight. In embodiments, the food product comprises the additive formulation in a concentration of from about 0.4% to about 2% by weight. In embodiments, the food product comprises the additive formulation in a concentration of from about 0.5% to about 2% by weight. In embodiments, the food product comprises the additive formulation in a concentration of from about 0.6% to about 2% by weight. In embodiments, the food product comprises the additive formulation in a concentration of from about 0.7% to about 2% by weight. In embodiments, the food product comprises the additive formulation in a concentration of from about 0.8% to about 2% by weight. In embodiments, the food product comprises the additive formulation in a concentration of from about 0.9% to about 2% by weight. In embodiments, the food product comprises the additive formulation in a concentration of from about 1% to about 2% by weight.

In embodiments, the food product is a liquid food product and comprises the additive formulation in a concentration of from about 0.01% to about 3%.

In embodiments, the food product is a liquid food product and comprises the additive formulation in a concentration of from about 0.05% to about 3%.

The food product is selected from: milk, yoghurt, yoghurt drinks, milk- or yoghurt-based smoothies, pasteurized UHT milk, sweet condensed milk, evaporated milk, fermented milks, milk-based fermented products, and infant formula containing milk fat; and comprises the additive formulation in a concentration of from about 0.01% to less than 3.5%. In embodiments, the food product is selected from: milk, yoghurt, yoghurt drinks, milk- or yoghurt-based smoothies, pasteurized UHT milk, sweet condensed milk, evaporated milk, fermented milks, milk-based fermented products, and infant formula containing milk fat; and comprises the additive formulation in a concentration of from about 0.01% to less than 3%. In embodiments, the food product is selected from: milk, yoghurt, yoghurt drinks, milk- or yoghurt-based smoothies, pasteurized UHT milk, sweet condensed milk, evaporated milk, fermented milks, milk-based fermented products, and infant formula containing milk fat; and comprises the additive formulation in a concentration of from about 0.01% to less than 2.5%. In embodiments, the food product is selected from: milk, yoghurt, yoghurt drinks, milk- or yoghurt-based smoothies, pasteurized UHT milk, sweet condensed milk, evaporated milk, fermented milks, milk-based fermented products, and infant formula containing milk fat; and comprises the additive formulation in a concentration of from about 0.01% to less than 2%. In embodiments, the food product is selected from: milk, yoghurt, yoghurt drinks, milk- or yoghurt-based smoothies, pasteurized UHT milk, sweet condensed milk, evaporated milk, fermented milks, milk-based fermented products, and infant formula containing milk fat; and comprises the additive formulation in a concentration of from about 0.01% to about 1.75%.

In embodiments, the food product is a yoghurt and comprises the additive formulation in a concentration of from about 0.01% to less than 3.5%. In embodiments, the food product is a yoghurt and comprises the additive formulation in a concentration of from about 0.01% to less than 3%. In embodiments, the food product is a yoghurt and comprises the additive formulation in a concentration of from about 0.01% to less than 2.5%. In embodiments, the food product is a yoghurt and comprises the additive formulation in a concentration of from about 0.01% to less than 2%. In embodiments, the food product is a yoghurt and comprises the additive formulation in a concentration of from about 0.01% to about 1.75%.

In embodiments, the food product is selected from: roux, sauces, soup (e.g. soup made from roux or soup made from cream), broths, and gravies; and the food product comprises the additive formulation in a concentration of from about 0.01% to about 4.5%. In embodiments, the food product is selected from: roux, sauces, soup (e.g. soup made from roux or soup made from cream), broths, and gravies; and the food product comprises the additive formulation in a concentration of from about 0.01% to about 4.3%.

In embodiments, the food product is roux; and the food product comprises the additive formulation in a concentration of from about 0.01% to about 4.5%. In embodiments, the food product is roux; and the food product comprises the additive formulation in a concentration of from about 0.01% to about 4.3%.

In embodiments, the food product is vegetable soup made from roux; and the food product comprises the additive formulation in a concentration of from about 0.01% to less than about 4%. In embodiments, the food product is vegetable soup made from roux; and the food product comprises the additive formulation in a concentration of from about 0.01% to less than about 3%. In embodiments, the food product is vegetable soup made from roux; and the food product comprises the additive formulation in a concentration of from about 0.01% to less than about 2%. In embodiments, the food product is vegetable soup made from roux; and the food product comprises the additive formulation in a concentration of from about 0.01% to less than about 1.5%. In embodiments, the food product is vegetable soup made from roux; and the food product comprises the additive formulation in a concentration of from about 0.01% to less than about 1.3%.

In embodiments, the food product is vegetable soup made from double cream; and the food product comprises the additive formulation in a concentration of from about 0.01% to less than about 4.5%. In embodiments, the food product is vegetable soup made from double cream; and the food product comprises the additive formulation in a concentration of from about 0.01% to less than about 4%. In embodiments, the food product is vegetable soup made from double cream; and the food product comprises the additive formulation in a concentration of from about 0.01% to less than about 3.5%.

In embodiments, the food product is pea protein liquid emulsion; and the food product comprises the additive formulation in a concentration of from about 0.01% to about 4.5%. In embodiments, the food product is pea protein liquid emulsion; and the food product comprises the additive formulation in a concentration of from about 0.01% to about 4%.

The additive formulation is an oil-free additive formulation. Therefore, every instance of the additive formulation referred to above includes an oil-free additive formulation.

In embodiments, the food product has a pH of less than about 7. In embodiments, the food product has a pH of less than about 4.8. In embodiments, the food product has a pH of from about 2 to about 7. In embodiments, the food product has a pH of from about 2 to about 4.8. In embodiments, the food product has a pH of from about 4 to about 6. In embodiments, the food product has a pH of from about 4 to about 5. In embodiments, the food product has a pH of about 4. In embodiments, the food product has a pH of about 4.5. In embodiments, the food product has a pH of about 5.

In an embodiment, the proteinaceous microgel is positively charged and the biopolymeric hydrogel is negatively charged. In an alternative embodiment, the proteinaceous microgel is negatively charged and the biopolymeric hydrogel is positively charged. In a preferred embodiment, the proteinaceous microgel is positively charged and the biopolymeric hydrogel is negatively charged.

In embodiments, the biopolymeric hydrogel is associated with an outer surface of the proteinaceous microgel by an electrostatic interaction. The association of the biopolymeric hydrogel with an outer surface of the proteinaceous microgel may be regarded as a form of 'coating' of the biopolymeric hydrogel onto the outer surface of the proteinaceous microgel. The association (or coating) of the biopolymeric hydrogel with an outer surface of the proteinaceous microgel results in an arrangement whereby the microgel is surrounded by a permeable mesh of biopolymeric hydrogel of different local concentrations on the outer surface of the proteinaceous microgel. In an embodiment, the association between the biopolymeric hydrogel and the outer surface of the proteinaceous microgel is a direct association, *i.e.,* the biopolymeric hydrogel and the outer surface of the proteinaceous microgel are associated with one another in the absence of an intermediate component. In an embodiment, the formulation of the present invention consists of only two oppositely charged components (*i.e.,* the proteinaceous microgel and the biopolymeric hydrogel). As explained above, the two components of the formulation of the invention interact with each other *via* direct, electrostatic interactions, thus allowing the microgel particle to be coated with oppositely-charged biopolymeric hydrogel.

In embodiments, the biopolymeric hydrogel associated with the outer surface of the proteinaceous microgel results in an outer surface that has an overall negative charge. In alternative embodiments, the biopolymeric hydrogel associated with the outer surface of the proteinaceous microgel results in an outer surface that has an overall positive charge.

In embodiments, the proteinaceous microgel is selected from the group consisting of: lactoferrin, lysozyme, gelatin, milk protein, bovine serum albumin, whey protein, casein, caseinate, egg protein, albumin, gluten, gelatin Type B, pea protein, rice protein, lupin, soy protein, wheat protein, millet protein, legume, legumin, gluten, corn protein, zein, peanut protein, almond protein, pistachio protein, cashew nut protein, walnut protein, hazelnut protein, pine nut protein, coconut protein, chitosan, chitin, potato protein, insect protein, algal protein, microbial protein, spirulina, fungal protein (mycoprotein), single cell protein, leaf protein, mung bean protein, faba bean protein, red kidney bean protein, tomato seed protein, pumpkin seed protein, flax seed protein, chick pea protein, hemp protein, sunflower protein, rapeseed protein, quinoa protein, amaranth protein, oat protein, barley protein, rye protein, sorghum protein and sesame protein in the form of isolates, concentrates or hydrolysates.

The microgel is a proteinaceous microgel. In embodiments, the proteinaceous microgel is selected from the group consisting of: lactoferrin, lysozyme, gelatin, milk protein, bovine serum albumin, whey protein, casein, caseinate, egg protein, albumin, gluten, gelatin Type B, pea protein, rice protein, lupin, soy protein, wheat protein, millet protein, legume, legumin, gluten, corn protein, zein, peanut protein, almond protein, pistachio protein, cashew nut protein, walnut protein, hazelnut protein, pine nut protein, coconut protein, potato protein, insect protein, algal protein, microbial protein, spirulina, fungal protein (mycoprotein), single cell protein, leaf protein, mung bean protein, faba bean protein, red kidney bean protein, tomato seed protein, pumpkin seed protein, flax seed protein, chick pea protein, hemp protein, sunflower protein, rapeseed protein, quinoa protein, amaranth protein, oat protein, barley protein, rye protein, sorghum protein and sesame protein in the form of isolates, concentrates or hydrolysates. In a preferred embodiment, the microgel is potato protein.

In embodiments, the microgel is charged at a pH of from about 3.0 to about 7.0. In such embodiments, the microgel is selected from the group consisting of: lactoferrin, lysozyme, gelatin Type B. Preferably, the microgel is charged at a pH of about 7.0.

In embodiments, the microgel is charged at a pH of from about 3.0 to about 4.0. In such embodiments, the proteinaceous is selected from the group consisting of: gelatin, milk protein, bovine serum albumin, whey protein, casein, caseinate, egg protein, albumin, gluten, pea protein, potato protein, rice protein, legumin, corn protein and peanut protein.

In embodiments, the microgel is no more than 500 nm in diameter. In embodiments, the microgel has a diameter of from about 50 nm to about 500 nm. In embodiments, the microgel has a diameter of from about 60 nm to about 500 nm. In embodiments, the microgel has a diameter of about 70 nm to about 500 nm. In embodiments, the microgel has a diameter of about 80 nm to about 500 nm. In embodiments, the microgel has a diameter of about 90 nm to about 500 nm. In embodiments, the microgel has a diameter of about 100 nm to about 500 nm.

In embodiments, the microgel is no more than 400 nm in diameter. In embodiments, the microgel has a diameter of from about 50 nm to about 400 nm. In embodiments, the microgel has a diameter of from about 60 nm to about 400 nm. In embodiments, the microgel has a diameter of about 70 nm to about 400 nm. In embodiments, the microgel has a diameter of about 80 nm to about 400 nm. In embodiments, the microgel has a diameter of about 90 nm to about 400 nm. In embodiments, the microgel has a diameter of about 100 nm to about 400 nm.

In embodiments, the microgel is no more than 300 nm in diameter. In embodiments, the microgel has a diameter of from about 50 nm to about 300 nm. In embodiments, the microgel has a diameter of from about 60 nm to about 300 nm. In embodiments, the microgel has a diameter of about 70 nm to about 300 nm. In embodiments, the microgel has a diameter of about 80 nm to about 300 nm. In embodiments, the microgel has a diameter of about 90 nm to about 300 nm. In embodiments, the microgel has a diameter of about 100 nm to about 300 nm.

In embodiments, the microgel has a diameter of no more than 200 nm. In embodiments, the microgel has a diameter of from about 50 nm to about 200 nm. In embodiments, the microgel has a diameter of from about 60 nm to about 200 nm. In embodiments, the microgel has a diameter of about 70 nm to about 200 nm. In a preferred embodiment, the microgel has a diameter of about 80 nm to about 200 nm. In embodiments, the microgel has a diameter of about 90 nm to about 200 nm. In embodiments, the microgel has a diameter of about 100 nm to about 200 nm.

In embodiment, the biopolymeric hydrogel may be in the form of one or more fibrils of biopolymeric hydrogel.

The biopolymeric hydrogel may be a polysaccharide-based hydrogel. In embodiments, the biopolymeric hydrogel is selected from the group consisting of: κ-carrageenan, I-carrageenan, λ-carrageenan, agar, agarose, alginate, pectin, dextran sulphate, cellulose and modified cellulose (ethyl cellulose, microcrystalline cellulose, carboxymethylcellulose, methylcellulose, hydroxypropylmethylcellulose), locust bean gum, gum Arabic, gum ghatti, konjac gum, Karaya gum, Cassia gum, xanthan gum, gellan gum, modified starches, and any negatively charged polysaccharide. In a preferred embodiment, the biopolymeric hydrogel is xanthan gum.

In embodiments, the fibrils of biopolymeric hydrogel are no more than 50 nm in diameter.

In embodiments, the fibrils of biopolymeric hydrogel have a diameter of from about 1 nm to about 50 nm. In embodiments, the fibrils of biopolymeric hydrogel have a diameter of from about 5 nm to about 50 nm. In embodiments, the fibrils of biopolymeric hydrogel have a diameter of from about 10 nm to about 50 nm.

In embodiments, the fibrils of biopolymeric hydrogel have a diameter of from about 1 nm to about 40 nm. In embodiments, the fibrils of biopolymeric hydrogel have a diameter of from about 1 nm to about 30 nm. In embodiments, the fibrils of biopolymeric hydrogel have a diameter of from about 1 nm to about 20 nm.

In embodiments, the fibrils of biopolymeric hydrogel have a diameter of from about 5 nm to about 40 nm. In embodiments, the fibrils of biopolymeric hydrogel have a diameter of from about 5 nm to about 30 nm. In embodiments, the fibrils of biopolymeric hydrogel have a diameter of from about 5 nm to about 20 nm.

In embodiments, the fibrils of biopolymeric hydrogel have a diameter of from about 10 nm to about 40 nm. In embodiments, the fibrils of biopolymeric hydrogel have a diameter of from about 10 nm to about 30 nm. In embodiments, the fibrils of biopolymeric hydrogel have a diameter of from about 10 nm to about 20 nm.

Preferably, the fibrils of biopolymeric hydrogel have a diameter of from about 5 nm to about 20 nm.

In embodiments, the fibrils of biopolymeric hydrogel are no more than 500 nm in length.

In embodiments, the fibrils of biopolymeric hydrogel have a length of from about 50 nm to about 500 nm. In embodiments, the fibrils of biopolymeric hydrogel have a length of from about 75 nm to about 500 nm. In embodiments, the fibrils of biopolymeric hydrogel have a length of from about 100 nm to about 500 nm.

In embodiments, the fibrils of biopolymeric hydrogel have a length of from about 50 nm to about 400 nm. In embodiments, the fibrils of biopolymeric hydrogel have a length of from about 75 nm to about 400 nm. In embodiments, the fibrils of biopolymeric hydrogel have a length of from about 100 nm to about 400 nm.

In embodiments, the fibrils of biopolymeric hydrogel have a length of from about 50 nm to about 300 nm. In embodiments, the fibrils of biopolymeric hydrogel have a length of from about 75 nm to about 300 nm. In embodiments, the fibrils of biopolymeric hydrogel have a length of from about 100 nm to about 300 nm.

In embodiments, the fibrils of biopolymeric hydrogel have a length of from about 50 nm to about 475 nm. In embodiments, the fibrils of biopolymeric hydrogel have a length of from about 50 nm to about 450 nm. In embodiments, the fibrils of biopolymeric hydrogel have a length of from about 50 nm to about 425 nm. In embodiments, the fibrils of biopolymeric hydrogel have a length of from about 50 nm to about 400 nm. In embodiments, the fibrils of biopolymeric hydrogel have a length of from about 50 nm to about 375 nm. In embodiments, the fibrils of biopolymeric hydrogel have a length of from about 50 nm to about 350 nm. In embodiments, the fibrils of biopolymeric hydrogel have a length of from about 50 nm to about 325 nm. In embodiments, the fibrils of biopolymeric hydrogel have a length of from about 50 nm to about 300 nm.

In embodiments, the fibrils of biopolymeric hydrogel have a length of from about 75 nm to about 475 nm. In embodiments, the fibrils of biopolymeric hydrogel have a length of from about 75 nm to about 450 nm. In embodiments, the fibrils of biopolymeric hydrogel have a length of from about 75 nm to about 425 nm. In embodiments, the fibrils of biopolymeric hydrogel have a length of from about 75 nm to about 400 nm. In embodiments, the fibrils of biopolymeric hydrogel have a length of from about 75 nm to about 375 nm. In embodiments, the fibrils of biopolymeric hydrogel have a length of from about 75 nm to about 350 nm. In embodiments, the fibrils of biopolymeric hydrogel have a length of from about 75 nm to about 325 nm. In embodiments, the fibrils of biopolymeric hydrogel have a length of from about 75 nm to about 300 nm.

In embodiments, the fibrils of biopolymeric hydrogel have a length of from about 100 nm to about 475 nm. In embodiments, the fibrils of biopolymeric hydrogel have a length of from about 100 nm to about 450 nm. In embodiments, the fibrils of biopolymeric hydrogel have a length of from about 100 nm to about 425 nm. In embodiments, the fibrils of biopolymeric hydrogel have a length of from about 100 nm to about 400 nm. In embodiments, the fibrils of biopolymeric hydrogel have a length of from about 100 nm to about 375 nm. In embodiments, the fibrils of biopolymeric hydrogel have a length of from about 100 nm to about 350 nm. In embodiments, the fibrils of biopolymeric hydrogel have a length of from about 100 nm to about 325 nm. In embodiments, the fibrils of biopolymeric hydrogel have a length of from about 100 nm to about 300 nm.

In a preferred embodiment, the fibrils of biopolymeric hydrogel have a length of from about 100 nm to about 300 nm.

The % outer surface coverage of the microgel by the biopolymeric hydrogel is at least about 40% (*e.g.*, at least about 41%, at least about 42%, at least about 43% or at least about 44%). In embodiments, the % outer surface coverage is at least about 45% (*e.g.*, at least about 46%, at least about 47%, at least about 48% or at least about 49%). In embodiments, the % outer surface coverage is at least about 50% (*e.g.*, at least about 51%, at least about 52%, at least about 53% or at least about 54%). In embodiments, the % outer surface coverage is at least about 55% (*e.g.*, at least about 56%, at least about 57%, at least about 58% or at least about 59%). In embodiments, the % outer surface coverage is at least about 60% (*e.g.*, at least about 61%, at least about 62%, at least about 63% or at least about 64%). In embodiments, the % outer surface coverage is at least about 65% (*e.g.*, at least about 66%, at least about 67%, at least about 68% or at least about 69%). In embodiments, the % outer surface coverage is at least about 70% (*e.g.*, at least about 71%, at least about 72%, at least about 73% or at least about 74%). In embodiments, the % outer surface coverage is at least about 75% (*e.g.*, at least about 76%, at least about 77%, at least about 78% or at least about 79%). In embodiments, the % outer surface coverage is at least about 80% (*e.g.*, at least about 81%, at least about 82%, at least about 83% or at least about 84%). In embodiments, the % outer surface coverage is at least about 85% (*e.g.*, at least about 86%, at least about 87%, at least about 88% or at least about 89%). In embodiments, the % outer surface coverage is at least about 90%.

In embodiments, the % outer surface coverage is from about 40% to about 99%. In embodiments, the % outer surface coverage is from about 40% to about 95%. In embodiments, the % outer surface coverage is from about 40% to about 90%. In embodiments, the % outer surface coverage is from about 40% to about 85%. In embodiments, the % outer surface coverage is from about 40% to about 80%. In embodiments, the % outer surface coverage is from about 40% to about 75%. In embodiments, the % outer surface coverage is from about 40% to about 70%. In embodiments, the % outer surface coverage is from about 40% to about 60%.

In embodiments, the % outer surface coverage is from about 45% to about 99%. In embodiments, the % outer surface coverage is from about 45% to about 95%. In embodiments, the % outer surface coverage is from about 45% to about 90%. In embodiments, the % outer surface coverage is from about 45% to about 85%. In embodiments, the % outer surface coverage is from about 45% to about 80%. In embodiments, the % outer surface coverage is from about 45% to about 75%. In embodiments, the % outer surface coverage is from about 45% to about 70%. In embodiments, the % outer surface coverage is from about 45% to about 60%.

In embodiments, the % outer surface coverage is from about 50% to about 99%. In embodiments, the % outer surface coverage is from about 50% to about 95%. In embodiments, the % outer surface coverage is from about 50% to about 90%. In embodiments, the % outer surface coverage is from about 50% to about 85%. In embodiments, the % outer surface coverage is from about 50% to about 80%. In embodiments, the % outer surface coverage is from about 50% to about 75%. In embodiments, the % outer surface coverage is from about 50% to about 70%. In embodiments, the % outer surface coverage is from about 50% to about 60%.

In embodiments, the % outer surface coverage is from about 55% to about 99%. In embodiments, the % outer surface coverage is from about 55% to about 95%. In embodiments, the % outer surface coverage is from about 55% to about 90%. In embodiments, the % outer surface coverage is from about 55% to about 85%. In embodiments, the % outer surface coverage is from about 55% to about 80%. In embodiments, the % outer surface coverage is from about 55% to about 75%. In embodiments, the % outer surface coverage is from about 55% to about 70%. In embodiments, the % outer surface coverage is from about 55% to about 60%.

In embodiments, the % outer surface coverage is from about 60% to about 99%. In embodiments, the % outer surface coverage is from about 60% to about 95%. In embodiments, the % outer surface coverage is from about 60% to about 90%. In embodiments, the % outer surface coverage is from about 60% to about 85%. In embodiments, the % outer surface coverage is from about 60% to about 80%. In embodiments, the % outer surface coverage is from about 60% to about 75%. In embodiments, the % outer surface coverage is from about 60% to about 70%.

In embodiments, the % outer surface coverage is from about 65% to about 99%. In embodiments, the % outer surface coverage is from about 65% to about 95%. In embodiments, the % outer surface coverage is from about 65% to about 90%. In embodiments, the % outer surface coverage is from about 65% to about 85%. In embodiments, the % outer surface coverage is from about 65% to about 80%. In embodiments, the % outer surface coverage is from about 65% to about 75%. In embodiments, the % outer surface coverage is from about 65% to about 70%.

In embodiments, the % outer surface coverage is from about 70% to about 99%. In embodiments, the % outer surface coverage is from about 70% to about 95%. In embodiments, the % outer surface coverage is from about 70% to about 90%. In embodiments, the % outer surface coverage is from about 70% to about 85%. In embodiments, the % outer surface coverage is from about 70% to about 80%. In embodiments, the % outer surface coverage is from about 70% to about 75%.

In embodiments, the % outer surface coverage is from about 75% to about 99%. In embodiments, the % outer surface coverage is from about 75% to about 95%. In embodiments, the % outer surface coverage is from about 75% to about 90%. In embodiments, the % outer surface coverage is from about 75% to about 85%. In embodiments, the % outer surface coverage is from about 75% to about 80%.

In embodiments, the % outer surface coverage is from about 80% to about 99%. In embodiments, the % outer surface coverage is from about 80% to about 95%. In embodiments, the % outer surface coverage is from about 80% to about 90%. In embodiments, the % outer surface coverage is from about 80% to about 85%.

In embodiments, the % outer surface coverage is from about 85% to about 99%. In embodiments, the % outer surface coverage is from about 85% to about 95%. In embodiments, the % outer surface coverage is from about 85% to about 90%.

In embodiments, the % outer surface coverage is from about 90% to about 99%.

In embodiments, the additive formulation is a colloidosome. In embodiments, the colloidosome is no more than 1000 nm in diameter. In embodiments, the colloidosome has a diameter of from about 50 nm to about 1000 nm. In embodiments, the colloidosome has a diameter of from about 60 nm to about 1000 nm. In embodiments, the colloidosome has a diameter of about 70 nm to about 1000 nm. In embodiments, the colloidosome has a diameter of about 80 nm to about 1000 nm. In embodiments, the colloidosome has a diameter of about 90 nm to about 1000 nm. In embodiments, the colloidosome has a diameter of about 100 nm to about 1000 nm.

In embodiments, the colloidosome has a diameter of from about 50 nm to about 900 nm. In embodiments, the colloidosome has a diameter of from about 60 nm to about 900 nm. In embodiments, the colloidosome has a diameter of about 70 nm to about 900 nm. In embodiments, the colloidosome has a diameter of about 80 nm to about 900 nm. In embodiments, the colloidosome has a diameter of about 90 nm to about 900 nm. In embodiments, the colloidosome has a diameter of about 100 nm to about 900 nm.

In embodiments, the colloidosome has a diameter of from about 50 nm to about 800 nm. In embodiments, the colloidosome has a diameter of from about 60 nm to about 800 nm. In embodiments, the colloidosome has a diameter of about 70 nm to about 800 nm. In embodiments, the colloidosome has a diameter of about 80 nm to about 800 nm. In embodiments, the colloidosome has a diameter of about 90 nm to about 800 nm. In embodiments, the colloidosome has a diameter of about 100 nm to about 800 nm.

In embodiments, the colloidosome has a diameter of from about 50 nm to about 700 nm. In embodiments, the colloidosome has a diameter of from about 60 nm to about 700 nm. In embodiments, the colloidosome has a diameter of about 70 nm to about 700 nm. In embodiments, the colloidosome has a diameter of about 80 nm to about 700 nm. In embodiments, the colloidosome has a diameter of about 90 nm to about 700 nm. In embodiments, the colloidosome has a diameter of about 100 nm to about 700 nm.

In embodiments, the colloidosome has a diameter of from about 50 nm to about 600 nm. In embodiments, the colloidosome has a diameter of from about 60 nm to about 600 nm. In embodiments, the colloidosome has a diameter of about 70 nm to about 600 nm. In embodiments, the colloidosome has a diameter of about 80 nm to about 600 nm. In embodiments, the colloidosome has a diameter of about 90 nm to about 600 nm. In embodiments, the colloidosome has a diameter of about 100 nm to about 600 nm.

In embodiments, the additive formulation is a colloidosome. In embodiments, the colloidosome is no more than 500 nm in diameter. In embodiments, the colloidosome has a diameter of from about 50 nm to about 500 nm. In embodiments, the colloidosome has a diameter of from about 60 nm to about 500 nm. In embodiments, the colloidosome has a diameter of about 70 nm to about 500 nm. In embodiments, the colloidosome has a diameter of about 80 nm to about 500 nm. In embodiments, the colloidosome has a diameter of about 90 nm to about 500 nm. In embodiments, the colloidosome has a diameter of about 100 nm to about 500 nm.

In embodiments, the colloidosome is no more than 400 nm in diameter. In embodiments, the colloidosome has a diameter of from about 50 nm to about 400 nm. In embodiments, the colloidosome has a diameter of from about 60 nm to about 400 nm. In embodiments, the colloidosome has a diameter of about 70 nm to about 400 nm. In embodiments, the colloidosome has a diameter of about 80 nm to about 400 nm. In embodiments, the colloidosome has a diameter of about 90 nm to about 400 nm. In embodiments, the colloidosome has a diameter of about 100 nm to about 400 nm.

In embodiments, the colloidosome is no more than 300 nm in diameter. In embodiments, the colloidosome has a diameter of from about 50 nm to about 300 nm. In embodiments, the colloidosome has a diameter of from about 60 nm to about 300 nm. In embodiments, the colloidosome has a diameter of about 70 nm to about 300 nm. In embodiments, the colloidosome has a diameter of about 80 nm to about 300 nm. In embodiments, the colloidosome has a diameter of about 90 nm to about 300 nm. In embodiments, the colloidosome has a diameter of about 100 nm to about 300 nm.

In embodiments, the colloidosome has a diameter of no more than 200 nm. In embodiments, the colloidosome has a diameter of from about 50 nm to about 200 nm. In embodiments, the colloidosome has a diameter of from about 60 nm to about 200 nm. In embodiments, the colloidosome has a diameter of about 70 nm to about 200 nm. In a preferred embodiment, the colloidosome has a diameter of about 80 nm to about 200 nm. In embodiments, the colloidosome has a diameter of about 90 nm to about 200 nm. In embodiments, the colloidosome has a diameter of about 100 nm to about 200 nm.

In embodiments, the colloidosome has a diameter of about 80 nm. In embodiments, the colloidosome has a diameter of about 90 nm. In embodiments, the colloidosome has a diameter of about 100 nm. In embodiments, the colloidosome has a diameter of about 110 nm. In embodiments, the colloidosome has a diameter of about 120 nm. In embodiments, the colloidosome has a diameter of about 130 nm. In embodiments, the colloidosome has a diameter of about 140 nm. In embodiments, the colloidosome has a diameter of about 150 nm.

In embodiments, the % outer surface coverage of the microgel by the hydrogel ( $c/c_{sat}$ ) is calculated by the following equation:

$$\frac{3c}{c_{sat}} = -ln\left(\frac{\zeta_c - \zeta_{sat}}{\zeta_0 - \zeta_{sat}}\right)$$ , wherein: $\zeta_{sat}$ is the $\zeta$-potential when the microgels are saturated with biopolymeric hydrogel; $\zeta_0$ is he $\zeta$-potential of the proteinaceous microgel in absence of the biopolymeric hydrogel; and $\zeta_c$ is the $\zeta$-potential of the formulation (*i.e.,* the colloidosome) at biopolymeric hydrogel concentration *c*. $C_{sat}$ is the minimum amount of the biopolymeric hydrogel required to completely cover the surface of the proteinaceous microgel [Anges Teo, Sung Je Lee, Kelvin K. T. Goh. Food Structure, 2017, 14, 60-67; Anwesha Sarkar, Kelvin K.T. Goh, Harjinder Singh, Food Hydrocolloids, 2009, 23, 1270-1278; S. Pallandre, E. A. Decker and D. J. McClements, Journal of Food Science, 2007, 72, E518-E524; Demet Guzey and David Julian McClements, J. Agric. Food Chem., 2007, 55, 475-485].

The weight ratio of the biopolymeric hydrogel to proteinaceous microgel may be from about 0.01:1 to about 10:1. In embodiments, the weight ratio is from about 0.01:1 to about 5:1. In embodiments, the weight ratio is from about 0.01:1 to about 4:1. In embodiments, the weight ratio is from about 0.01:1 to about 3:1. In embodiments, the weight ratio is from about 0.01:1 to about 2:1. In embodiments, the weight ratio is from about 0.01:1 to about 1.5:1. In embodiments, the weight ratio is from about 0.01:1 to about 1:1.

The weight ratio of the biopolymeric hydrogel to proteinaceous microgel may be from about 0.1:1 to about 10:1. In embodiments, the weight ratio is from about 0.1:1 to about 5:1. In embodiments, the weight ratio is from about 0.1:1 to about 4:1. In embodiments, the weight ratio is from about 0.1:1 to about 3:1. In embodiments, the weight ratio is from about 0.1:1 to about 2:1. In embodiments, the weight ratio is from about 0.1:1 to about 1.5:1. In embodiments, the weight ratio is from about 0.1:1 to about 1:1.

In embodiments, the weight ratio of the biopolymeric hydrogel to proteinaceous microgel is from about 0.2:1 to about 5:1. In embodiments, the weight ratio is from about 0.3:1 to about 5:1. In embodiments, the weight ratio is from about 0.4:1 to about 5:1. In embodiments, the weight ratio is from about 0.5:1 to about 5:1. In embodiments, the weight ratio is from about 0.6:1 to about 5:1. In embodiments, the weight ratio is from about 0.7:1 to about 5:1. In embodiments, the weight ratio is from about 0.8:1 to about 5:1. In embodiments, the weight ratio is from about 0.9:1 to about 5:1. In embodiments, the weight ratio is from about 1:1 to about 5:1. In embodiments, the weight ratio is from about 1.5:1 to about 5:1. In embodiments, the weight ratio is from about 2:1 to about 5:1. In embodiments, the weight ratio is from about 3:1 to about 5:1. In embodiments, the weight ratio is from about 4:1 to about 5:1.

In embodiments, the weight ratio of biopolymeric hydrogel to proteinaceous microgel is from about 0.2:1 to about 3:1. In embodiments, the weight ratio of biopolymeric hydrogel to proteinaceous microgel is from about 0.2:1 to about 2:1. In embodiments, the weight ratio is from about 0.3:1 to about 2:1. In embodiments, the weight ratio is from about 0.4:1 to about 2:1. In embodiments, the weight ratio is from about 0.5:1 to about 2:1.

In embodiments, the weight ratio of biopolymeric hydrogel to proteinaceous microgel is from about 0.5:1 to about 1.5:1. In embodiments, the weight ratio is from about 0.5:1 to about 1:1.

In a preferred embodiment, the weight ratio is from about 0.2:1 to about 3:1.

In a preferred embodiment, the weight ratio is from about 0.5:1 to about 2:1.

In an embodiment, the medical food and/or parenteral nutrition further comprises a pharmaceutically acceptable excipient. In an embodiment, the pharmaceutically acceptable excipient comprises a buffered solution having a pH less than about 4.8. In an embodiment, the pharmaceutically acceptable excipient comprises a buffered solution having a pH of from about 2.0 to about 7.0. In an embodiment, the pharmaceutically acceptable excipient comprises a buffered solution having a pH of from about 2.0 to about 4.8. In an embodiment, the pharmaceutically acceptable excipient comprises a buffered solution having a pH of from about 3.0 to about 4.0. In an embodiment, the pharmaceutically acceptable excipient comprises a buffered solution having a pH of about 7.0.

In a preferred embodiment, the microgel is potato protein and the biopolymeric hydrogel is made by addition of xanthan gum.

*Method for preparing food product*

In embodiments, the buffer solution of step (a) may be selected from the group consisting of: 4-(2-hydroxyethyl)-1-piperazineethanesulfonic acid (HEPES), phosphate buffer, 2-(N-Morpholino)ethanesulfonic acid hydrate, 4-Morpholineethanesulfonic acid (MES hydrate), 2,2-Bis(hydroxymethyl)-2,2',2"-nitrilotriethanol (Bis-Tris), citric acid monohydrate and trisodium citrate dihydrate.

In embodiments, the buffer solution of step (a) may be selected from the group consisting of: 4-(2-hydroxyethyl)-1-piperazineethanesulfonic acid (HEPES), phosphate buffer, 2-(N-Morpholino)ethanesulfonic acid hydrate, 4-Morpholineethanesulfonic acid (MES hydrate), 2,2-Bis(hydroxymethyl)-2,2',2"-nitrilotriethanol (Bis-Tris) and citric acid monohydrate.

In embodiments, the buffer solution of step (a) has a concentration of from about 1 to 50 mM. In an embodiment, the buffer solution of step (a) has a concentration of about 20 mM. In a preferred embodiment, the buffer solution of step (a) has a concentration of about 10 mM.

In embodiments, the buffer solution of step (a) has a pH of from about 3.0 to about 7.0. In an embodiment, the buffer solution of step (a) has a pH of from about 4.0 to about 6.0. In a preferred embodiment, the buffer solution of step (a) has a pH of about 5.0. In a preferred embodiment, the buffer solution of step (a) has a pH of about 3.0.

In embodiments, the proteinaceous microgel is selected from the group consisting of: lactoferrin, lysozyme, gelatin, milk protein, bovine serum albumin, whey protein, casein, caseinate, egg protein, albumin, gluten, gelatin Type B, pea protein, rice protein, lupin, soy protein, wheat protein, millet protein, legume, legumin, gluten, corn protein, zein, peanut protein, almond protein, pistachio protein, cashew nut protein, walnut protein, hazelnut protein, pine nut protein, coconut protein, chitosan, chitin, potato protein, insect protein, algal protein, microbial protein, spirulina, fungal protein (mycoprotein), single cell protein, leaf protein, mung bean protein, faba bean protein, red kidney bean protein, tomato seed protein, pumpkin seed protein, flax seed protein, chick pea protein, hemp protein, sunflower protein, rapeseed protein, quinoa protein, amaranth protein, oat protein, barley protein, rye protein, sorghum protein and sesame protein in the form of isolates, concentrates or hydrolysates.

The material is a proteinaceous microgel. In embodiments, the proteinaceous microgel is selected from the group consisting of: lactoferrin, lysozyme, gelatin, milk protein, bovine serum albumin, whey protein, casein, caseinate, egg protein, albumin, gluten, gelatin Type B, pea protein, rice protein, lupin, soy protein, wheat protein, millet protein, legume, legumin, gluten, corn protein, zein, peanut protein, almond protein, pistachio protein, cashew nut protein, walnut protein, hazelnut protein, pine nut protein, coconut protein, potato protein, insect protein, algal protein, microbial protein, spirulina, fungal protein (mycoprotein), single cell protein, leaf protein, mung bean protein, faba bean protein, red kidney bean protein, tomato seed protein, pumpkin seed protein, flax seed protein, chick pea protein, hemp protein, sunflower protein, rapeseed protein, quinoa protein, amaranth protein, oat protein, barley protein, rye protein, sorghum protein and sesame protein in the form of isolates, concentrates or hydrolysates. In a preferred embodiment, the microgel is potato protein.

In embodiments, the resulting solution of step (a) comprises the proteinaceous material in an amount of at least about 4 wt%. In embodiments, the resulting solution of step (a) comprises the proteinaceous material in an amount of at least about 6 wt%. In embodiments, the resulting solution of step (a) comprises the proteinaceous material in an amount of at least about 8 wt%. In embodiments, the resulting solution of step (a) comprises the proteinaceous material in an amount of no more than about 20 wt%.

In a preferred embodiment, the resulting solution of step (a) comprises the proteinaceous material in an amount of about 12 wt%. In a preferred embodiment, the resulting solution of step (a) comprises the proteinaceous material in an amount of about 9 wt%. In a preferred embodiment, the resulting solution of step (a) comprises the proteinaceous material in an amount of about 6 wt%.

In embodiments, dissolving the proteinaceous material in the buffer solution in step (a) comprises stirring the mixture until complete solubilisation occurs. In embodiments, dissolving the proteinaceous material in the buffer solution in step (a) involves stirring the mixture for at least about 5 minutes, for at least about 20 minutes, for at least about 30 minutes, for at least about 40 minutes, for at least about 50 minutes, for at least about 1 hour, for at least about 1.5 hours, for at least about 2 hours, or for at least about 2.5 hours.

In a preferred embodiment, dissolving the proteinaceous material in the buffer solution in step (a) involves stirring the mixture for about 2 hours.

In embodiments, heating the resulting solution in step (a) is performed for at least about 10 minutes, for at least about 20 minutes or for at least about 30 minutes.

In a preferred embodiment, heating the resulting solution in step (a) is performed for about 30 minutes.

In embodiments, heating the resulting solution in step (a) is performed at a temperature of at least about 65 ° C (e.g., at least about 65 ° C, at least about 70 ° C, at least about 75 ° C, or at least about 80 ° C). In embodiments, heating the resulting solution in step (a) is performed at a temperature of at least about 70 ° C (e.g., at least about 75 ° C, at least about 80 ° C, at least about 85 ° C, or at least about 90 ° C). In embodiments, heating the resulting solution in step (a) is performed at a temperature of at least about 65 ° C and no more than about 150 ° C (e.g., at least about 65° C and no more than about 140 ° C, at least about 70° C and no more than about 130 ° C or at least about 80° C and no more than about 110 ° C. In embodiments, heating the resulting solution in step (a) is performed at a temperature of at least about 70 ° C and no more than about 150 ° C (e.g., at least about 70° C and no more than about 140 ° C, at least about 80° C and no more than about 130 ° C or at least about 90° C and no more than about 110 ° C. Heating at 121 ° C sterilises the solution. Heating at 135 ° C is ultra-high temperature (UHT) treatment.

In a preferred embodiment, heating the resulting solution is performed at about 90 ° C. In a preferred embodiment, heating the resulting solution is performed at about 65 ° C.

In embodiments, the weight ratio of heat-set gel to buffer solution in step (b) is about 3:1 w/w.

In embodiments, the step of homogenising to form the proteinaceous microgel in step (b) is performed at a pressure of at least 300 bar.

In embodiments, step (b) further comprises the step of blending the mixture of heat-set gel and buffer solution to form macrogel particles before homogenising to form the proteinaceous microgel.

In embodiments, step (b) further comprises the step of degassing the mixture of heat-set gel and buffer solution before homogenising to form the proteinaceous microgel. In such embodiments, the mixture is degassed for at least about 3 minutes.

In embodiments, the solution of biopolymeric hydrogel of step (c) comprises at least about 0.05 wt% of the biopolymeric hydrogel. In embodiments, the solution of biopolymeric hydrogel of step (c) comprises no more than about 5 wt% of the biopolymeric hydrogel. In embodiments, the solution of biopolymeric hydrogel of step (c) comprises from about 0.05 wt% to about 3 wt % of the biopolymeric hydrogel.

In a preferred embodiment, the solution of biopolymeric hydrogel of step (c) comprises about 1.5 wt% of the biopolymeric hydrogel.

In embodiments, the buffer solution of step (c) may be selected from the group consisting of: 4-(2-hydroxyethyl)-1-piperazineethanesulfonic acid (HEPES), phosphate buffer, 2-(N-Morpholino)ethanesulfonic acid hydrate, 4-Morpholineethanesulfonic acid (MES hydrate), 2,2-Bis(hydroxymethyl)-2,2',2"-nitrilotriethanol (Bis-Tris), citric acid monohydrate and trisodium citrate dihydrate.

In embodiments, the solution of biopolymeric hydrogel of step (c) comprises a buffer solution. In such embodiments, the buffer solution may be selected from the group consisting of: 4-(2-hydroxyethyl)-1-piperazineethanesulfonic acid (HEPES), phosphate buffer, 2-(N-Morpholino)ethanesulfonic acid hydrate, 4-Morpholineethanesulfonic acid (MES hydrate), 2,2-Bis(hydroxymethyl)-2,2',2"-nitrilotriethanol (Bis-Tris) and citric acid monohydrate.

In such embodiments, the buffer solution of step (c) has a concentration of from about 1 mM to 50 mM. In an embodiment, the buffer solution of step (c) has a concentration of about 20 mM. In a preferred embodiment, the buffer solution of step (c) has a concentration of about 10 mM.

In embodiments, the weight ratio of the proteinaceous microgel to biopolymeric hydrogel used in step (c) is selected in accordance with the first aspect of the invention.

In embodiments, the solution of biopolymeric hydrogel of step (c) is formed by (i) heating a mixture of one or more biopolymeric materials and buffer solution while shearing the mixture to form the biopolymeric hydrogel, and (ii) cooling the resulting aqueous dispersion comprising the hydrogel. In such embodiments, heating the mixture in step (i) may be performed at a temperature of at least about 50 °C (e.g., at least about 60 °C, at least about 70 °C, at least about 80 °C, at least about 90 °C). In embodiments, heating the resulting solution in step (i) is performed at a temperature of at least about 65 ° C (e.g., at least about 65 ° C, at least about 70 ° C, at least about 75 ° C, or at least about 80 ° C). In embodiments, heating the resulting solution in step (i) is performed at a temperature of at least about 70 ° C (*e.g.*, at least about 75 ° C, at least about 80 ° C, at least about 85 ° C, or at least about 90 ° C). In embodiments, heating the resulting solution in step (i) is performed at a temperature of at least about 65 ° C and no more than about 150 ° C (*e.g.*, at least about 65° C and no more than about 140 ° C, at least about 70 ° C and no more than about 130 ° C or at least about 80 ° C and no more than about 110 ° C. In embodiments, heating the resulting solution in step (i) is performed at a temperature of at least about 70 ° C and no more than about 150 ° C (*e.g.*, at least about 70° C and no more than about 140 ° C, at least about 80° C and no more than about 130 ° C or at least about 90° C and no more than about 110 ° C. Heating at 121 ° C sterilises the solution. Heating at 135 ° C is ultra-high temperature (UHT) treatment.

In such embodiments, cooling the resulting aqueous dispersion comprising the biopolymeric hydrogel in step (ii) may be performed at around 37 °C.

In embodiment, step (d) involves adding the additive formulation to the base food in a quantity to achieve a concentration of additive formulation as defined in any of the embodiments relating to the first aspect.

The food product may be as described in any of the embodiments relating to the first aspect.

*Uses*

The food product may be as described in any of the embodiments relating to the first aspect. The concentration of additive formulation in the food product may be as described in any of the embodiments relating to the first aspect.

**EXAMPLES**

**Materials and Methods**

Potato protein isolate was purchased from Sosa Ingredients, Spain. Lactoferrin was purchased from Ingredia, France. Xanthan gum, citric acid, and sodium citrate were all obtained from Special Ingredients, UK. Solutions of biopolymers, potato protein isolate and xanthan gum, were made in a citrate buffer consisting of 10 mM food-grade citric acid and 10 mM food-grade sodium citrate mixed in adequate proportions so as to reach a pH of 5.0. In addition, solution of lactoferrin and xanthan gum were made in a 10 mM 4-(2-hydroxyethyl)-1-piperazineethanesulfonic acid (HEPES) and mixed in adequate proportions so as to reach a pH of 7.0. Other ingredients used in the food recipes were common food items that were purchased from a local supermarket.

**Characterisation**

Rheology

A rotational rheometer (Kinexus Ultra+ rheometer, Malvern Instruments, UK) equipped with a cone-on-plate geometry (CP2/60, angle 1°, PL65) was used to measure the apparent viscosity of the samples. The gap was fixed at 1.0 mm, and the temperature was controlled at 37°C for the entire duration of the measurement. Apparent viscosity was measured at shear rates ranging between 0.01 and 1000 $s^{-1}$.

Tribology

A tribology-cell attachment to the rheometer (MCR-302, Anton Paar, Austria) was used to measure the lubrication properties of samples, with a glass ball (R = 7.35 mm) on three polydimethylsiloxane (PDMS) pins (6 mm pin height), latter inclined at 45° to the base to mimic orally relevant conditions. The temperature was set to 37 °C to mimic oral processing temperature and the normal load was fixed at 2.0 N for all measurements. Friction coefficients were measured at speeds varying from 0.001 to 1 m/s, while samples were made sure to cover all three PDMS pins.

Sensory evaluation

A discriminative triangle test was carried out to evaluate the performance of the present invention (lubricant, Example 1) at replacing fat in foods (AREA 21-087, ethics approved by the Faculty Research Ethics Committee, University of Leeds). A total of 93 healthy, untrained panellists participated, 38 males and 55 females ranging in age from 18 to 55 years old, with an average age of 27.08 years.

For each food example, a reference recipe was made with the full-fat composition and one fat-replaced recipe was prepared using the present invention (lubricant, Example 1) as the fat mimic. During the trial, participants were randomly presented with a set of three samples of the same food, two of which were identical and one different. They were asked to taste the samples in order (from left to right) and pick out the odd sample. The experimental design and randomisation were generated by Design Expert® (Stat-Ease Inc., Minneapolis, USA). All samples were placed in opaque plastic sample cups, labelled with randomly generated three-digit codes. Participants were seated at separate tables and were instructed to take sips of water and bites of crackers (Cream Crackers, Morrisons, UK) before the start and between samples to cleanse their palate.

Example 1a: Manufacture of potato protein microgels coated by xanthan gum hydrogel

Xanthan gum hydrogel (XGH, 1.5 wt%) was prepared by dissolving powdered xanthan gum in 10 mM citrate buffer at pH 5.0 at room temperature, while being sheared for 24 hours under constant stirring for a complete solubilisation, hydration, and formation of hydrogel.

Potato protein isolate solution (6 wt%) was prepared by adding powdered potato protein isolate in 10 mM citrate buffer at pH 5.0, and stirring for 2 hours to ensure complete solubilisation. Then the pH of the solution was adjusted to 5.0 by adding citric acid, and finally the solution was heated at 90 °C for 30 minutes to denature the potato protein and form potato protein microgel (PoPM) by controlled shearing.

The lubricant formulation was prepared by adding PoPM to XGH under gentle stirring at the weight ratio of 0.5:1 w/w (XGH/PoPM). For pH adjustment study, 0.1 N HCl was added to adjust the pH from pH 5.0 to pH 4.0 and 3.0

Example 1b: Manufacture of lactoferrin microgels coated by xanthan hydrogel

Xanthan gum hydrogel (XGH, 1.5 wt%) was prepared by dissolving powdered xanthan gum in 10 mM 4-(2-hydroxyethyl)-1-piperazineethanesulfonic acid (HEPES) at pH 7.0 at room temperature, while being sheared for 24 hours under constant stirring for a complete solubilisation, hydration, and formation of hydrogel.

Lactoferrin solution (12 wt%) was prepared by adding lactoferrin powder in 10 mM HEPES buffer at pH 7.0 and stirring for 2 hours to ensure complete solubilisation. The solution was heated at 90 ° C for 30 minutes to form heat-set gel, which was mixed with 10 mM HEPES buffer (3:1 w/w) at pH 7.0 and broken into macrogel particles using a hand blender (HB724, Kenwood, UK) for 5 minutes. Then the resulting lactoferrin macrogel particles + buffer mixture was transferred to a conditioning mixer (ARE-250, THINKY Corporation, Japan) for degassing for 3 minutes. The degassed macrogel particle + buffer mixture was then homogenized by passing twice through Leeds Jet Homogenizer operating at a pressure of 300 $\pm$ 20 bars to form lactoferrin microgel (LFM) particles.

The formulation was prepared by adding LFM to XGH under gentle stirring at the weight ratio of 0.5:1 w/w (XGH/LFM). For pH adjustment study, 0.1 N HCl as added to adjust the pH from pH 7.0 to pH 6.0, 5.0, 4.0 and 3.0.

In the following examples, foods with reference recipes and foods with reduced fat containing the present invention ("lubricant" = Example 1a) were used. Recipes with fat replaced with water rather than the lubricant (Example 1a) are included as well for comparison purposes.

Example 2: Yoghurt with reduced fat

In this example, the reference, natural fat yoghurt, has a fat content of 3.7 wt%, and the fat replacement levels tested are 50% and 100%.

A base yoghurt was made by mixing skimmed milk, skimmed milk powder, and dried bacteria starter culture (*Lactobacillus bulgaricus* and *Streptococcus thermophilus*). The dispersion was placed in a sterile metal urn, heated at 43 °C for 7 hours in a water bath and subsequently cooled in a fridge at 4 °C overnight. To make the reference recipe, double cream was mixed into base yoghurt so that the fat content of the reference represents that of a commercial full-fat natural yoghurt (3.7 wt%). In the fat-replaced recipes, skimmed milk, and the present invention or water, were added instead of double cream to replace fat. The yoghurt prepared using the present invention, *i.e.,* 50% FR-L and 100% FR-L, was stable, homogenous, and showed little syneresis. The recipes are described in Table 1 below.

*Table 1*

| | Ingredient percentage in each recipe (wt%) | | | |
|---|---|---|---|---|
| **Recipe** | **Ref Yoghurt** | **50% FR-L** | **100% FR-L** | **100% FR-W** |
| Fat replacement | 0% fat replaced (reference made from natural food fat) | 50% fat replaced with the present invention (lubricant, Example 1) | 100% fat replaced with the present invention (lubricant, Example 1) | 100% fat replaced with water |
| Base yoghurt formulation | | | | |
| Skimmed milk (0.1 wt% fat) | 81.80 | | | |
| Skimmed milk powder | 11.20 | | | |
| Dried bacteria starter culture | 0.0006 | | | |
| Natural fat or fat replacer added to base yoghurt | | | | |
| Double cream (50 wt% fat) | 7.0 | 3.5 | | |
| Skimmed milk | | 1.75 | 3.5 | 3.5 |
| Present invention (lubricant, Example 1) | | 1.75 | 3.5 | |
| Water | | | | 3.5 |

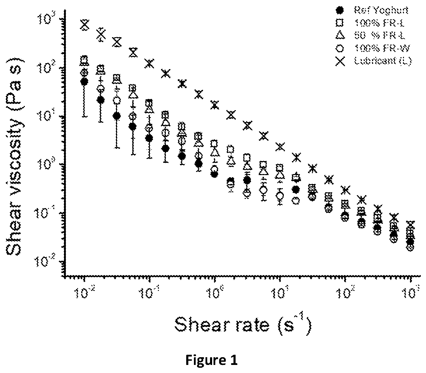

To evaluate the fluidity of the four yoghurt recipes under relevant oral conditions, their apparent viscosity at an orally relevant shear rate (50 s$^{-1}$) was compared (Figure 1).

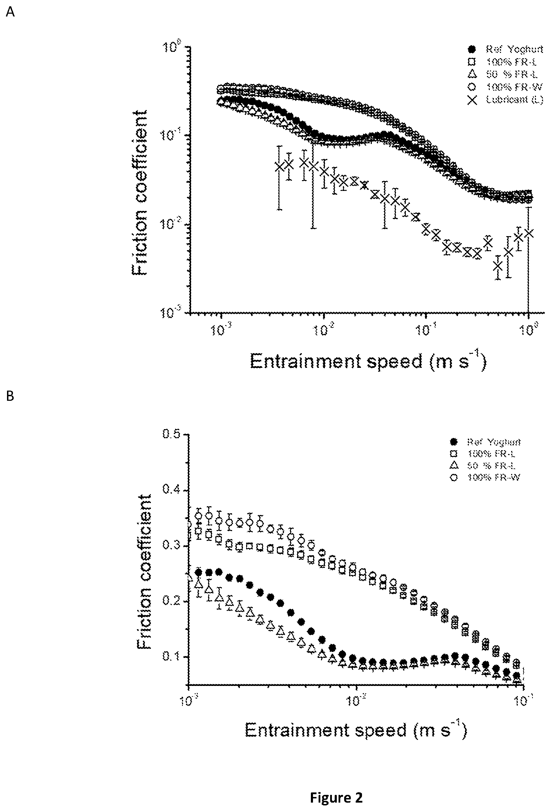

Figure 2 shows the lubrication performance of the four yoghurts under relevant oral conditions, represented by the friction coefficient as a function of entrainment speeds.

A triangle test was performed for the reference yoghurt and the 50% FR-L yoghurt composition. Results are summarised in Table 2 below.

*Table 2*

| Product | Recipes | Total number of responses | Number of correct responses | Significant difference |
|---|---|---|---|---|
| Yoghurt (3.5% fat content) | Full fat *vs.* 50% fat replacement (the latter containing the present invention (lubricant, Example 1)) | 93 | 34 | No significant difference, p > 0.05 |

Example 3: Roux/white sauce

In this example, the reference, full-fat roux/white sauce, has a fat content of 18 wt%, and the fat replacement levels tested are 50% and 100%. The recipes are described in Table 3 below.

To make any of the recipes above, ingredients, apart from plain wheat flour, were added to a saucepan on medium heat. When butter melted, plain flour was added under constant stirring. The mixture was further mixed and heated until desired thickness was obtained.

*Table 3*

| | Ingredient percentage in each recipe (wt%) | | | |
|---|---|---|---|---|
| Recipe | Ref Roux | 50% FR-L | 100% FR-L | 100% FR-W |
| Fat replacement | 0% fat replaced (reference made from natural food fat) | 50% fat replaced with the present invention (lubricant, Example 1) | 100% fat replaced with the present invention (lubricant, Example 1) | 100% fat replaced with water |
| Plain wheat flour | 10.5 | 10.5 | 10.5 | 10.5 |
| Skimmed milk (0.1 wt% fat) | 78.9 | 80.0 | 80.9 | 80.9 |
| Butter (82.2 wt% fat) | 10.6 | 5.2 | | |
| Present invention (lubricant, Example 1) | | 4.3 | 8.6 | |
| Water | | | | 8.6 |

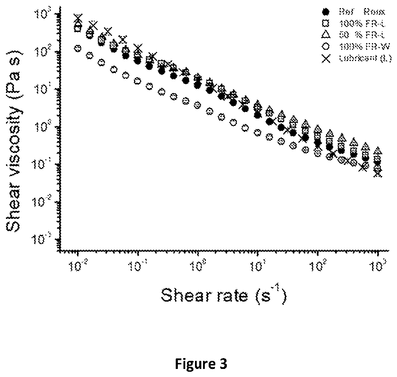

To evaluate the fluidity of the roux recipes under relevant oral conditions, their apparent viscosity at an orally relevant shear rate ($50\ s^{-1}$) was compared (Figure 3).

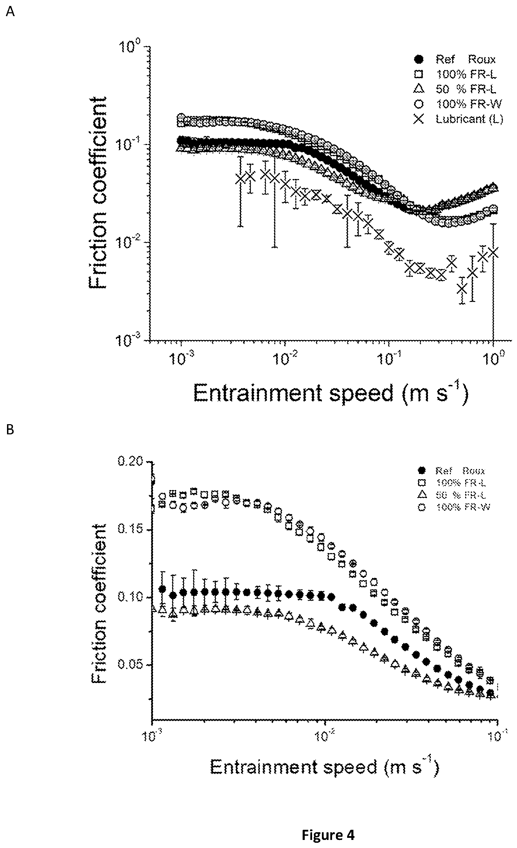

Figure 4 shows the lubrication performance of the four roux under relevant oral conditions, represented by the friction coefficient as a function of entrainment speeds.

A triangle test was performed for the reference roux and the 50% FR-L roux composition. Results are summarised in Table 4 below.

*Table 4*

| Product | Formulations | Total number of responses | Number of correct responses | Significant difference |
|---|---|---|---|---|
| Roux/white sauce (8.9% fat content) | Full fat *vs.* 50% fat replacement with the present invention (lubricant, Example 1) | 93 | 40 | No significant difference, p > 0.01 |

Example 4: Vegetable soup made from roux

In this example, the reference vegetable soup made from full-fat roux, has a fat content of 1.3 wt%, and the fat replacement levels tested are 50% and 100%. The recipes are described in Table 5 below.

The vegetable soup was made by mixing a base soup with the roux/white sauce from Example 3. To prepare the base soup, stock cubes were first dissolved into boiling water. When dissolved, the liquid was put into a pan with added garlic and kept warm on the lowest heat setting. Potatoes were chopped into fine cubes (1 cm x 1 cm). Frozen vegetables (onions and mixed vegetables) were heated on a medium heat in a frying pan with the potatoes, until softened. Vegetables were mixed in the liquid, and the entire pot was boiled on high heat. Salt, black pepper, and mixed dried herbs were added to season, and the soup was left to simmer for a further 3 minutes. Once the soup base was cooled, the roux/white sauce from Example 3 was added and mixed so that the final soup contains 85 wt% base soup and 15 wt% roux/white sauce. As shown in the tabulated recipes below, a full-fat vegetable soup (reference vegetable soup roux) was made by mixing the base soup with full-fat roux/white sauce (*i.e.,* the reference roux in Example 3), and a 50% fat-replaced soup (50% FR-L) was prepared by mixing the base soup with a 50% fat-replaced roux/white sauce (*i.e.,* the 50% FR-L composition of Example 3).

*Table 5*

| | Ingredient percentage in each recipe (wt%) | | | |
|---|---|---|---|---|
| **Recipe** | **Ref Veg Soup Roux** | **50% FR-L** | **100% FR-L** | **100% FR-W** |
| Fat replacement | 0% fat replaced (reference made from natural food fat) | 50% fat replaced with the present invention (lubricant, Example 1) | 100% fat replaced with the present invention (lubricant, Example 1) | 100% fat replaced with water |
| | Base soup formulation | | | |
| Vegetable stock cube | 1.1 | | | |
| Water | 60.3 | | | |
| Frozen onion | 6.0 | | | |
| Garlic paste | 0.4 | | | |
| Fresh potato | 6.0 | | | |
| Mixed frozen vegetables (carrot, pea, sweetcorn 1:1:1) | 10.8 | | | |
| Salt | 0.2 | | | |
| Mixed dried herbs | 0.1 | | | |
| Black pepper | 0.05 | | | |
| **Roux/white sauce** from Example 3 | **Ref Veg Soup Roux (Example 3)** | **50% FR (Example 3)** | **100% FR (Example 3)** | **100% FR-W (Example 3)** |
| Plain wheat flour | 1.6 | 1.6 | 1.6 | 1.6 |
| Skimmed milk (0.1 wt% fat) | 11.8 | 12.0 | 12.1 | 12.2 |
| Butter (82 wt% fat) | 1.6 | 0.8 | | |
| Present invention (lubricant, Example 1) | | 0.6 | 1.3 | |
| Water | | | | 1.3 |

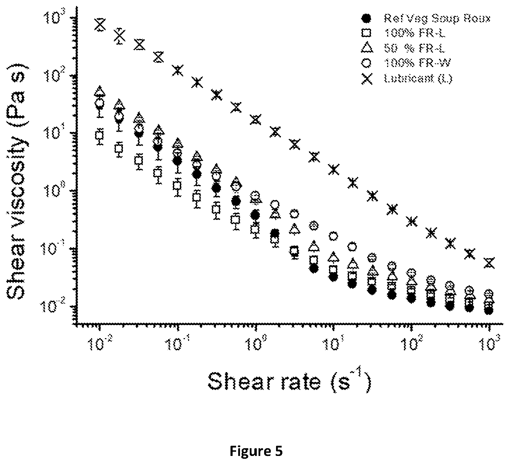

To evaluate the fluidity of the four vegetable soups made with roux recipes under relevant oral conditions, their apparent viscosity at an orally relevant shear rate (50 s$^{-1}$) was compared (Figure 5).

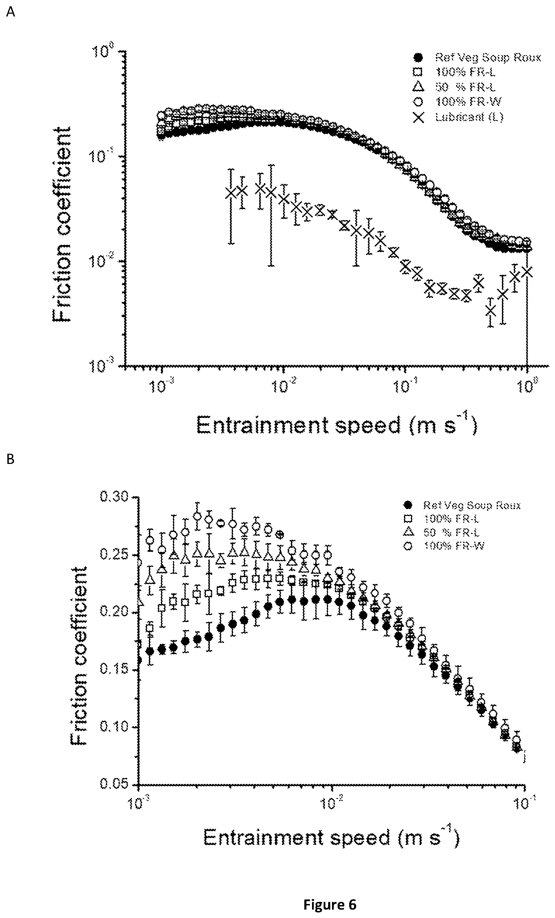

Figure 6 shows the lubrication performance of the four vegetable soups made with roux recipes under relevant oral conditions, represented by the friction coefficient as a function of entrainment speeds.

A triangle test was performed for the reference vegetable soup roux and the 50% FR-L vegetable soup roux composition. The soups were served warm at 55 °C to be consistent with everyday consuming habits. Results are summarised in Table 6 below.

*Table 6*

| Product | Formulations | Total number of responses | Number of correct responses | Significant difference |
|---|---|---|---|---|
| Vegetable soup made with roux (1.3% fat content) | Full fat *vs.* 50% fat Replacement with the present invention (lubricant, Example 1) | 93 | 34 | No significant difference, p > 0.05 |

Example 5: Vegetable soup made from double cream with reduced fat

In this example, the reference vegetable soup made from full-fat double cream, has a fat content of 7.0 wt%, and the fat replacement levels tested are 50% and 100%. The recipes are described in Table 7 below.

The procedure for making the base stock soup is the same as in Example 4. For this example, the base soup constitutes 90 wt% of the final soup product, and the other 10 wt% are either double cream, or the skimmed milk and present invention (lubricant, Example 1).

*Table 7*

| | Ingredient percentage in each recipe (wt%) | | | | |
|---|---|---|---|---|---|
| Recipe | Ref Veg Soup Cream | 25% FR-L | 50% FR-L | 100% FR-L | 100% FR-W |
| Fat replacement | 0% fat replaced | 25% fat replaced with the present invention (Example 1) | 50% fat replaced with the present invention (Example 1) | 100% fat replaced with the present invention (Example 1) | 100% fat replaced with water |
| | Base soup formulation | | | | |
| Vegetable stock cube | 1.15 | | | | |
| Water | 61.1 | | | | |
| Frozen onion | 6 | | | | |
| Garlic paste | 0.38 | | | | |
| Fresh potato | 6 | | | | |
| Mixed frozen vegetables (carrot, pea, sweetcorn 1:1:1) | 11 | | | | |
| Salt | 0.2 | | | | |
| Mixed dried herbs | 0.1 | | | | |
| Black pepper | 0.1 | | | | |
| Double cream (50 wt% fat) | 14.0 | 10.5 | 7 | | |
| Skimmed milk (0.1 wt% fat) | | 1.75 | 3.5 | 7 | 7 |
| Present invention (lubricant, Example 1) | | 1.75 | 3.5 | 7 | |

(continued)

| | Base soup formulation | | | | |
|---|---|---|---|---|---|
| Water | | | | | 7 |

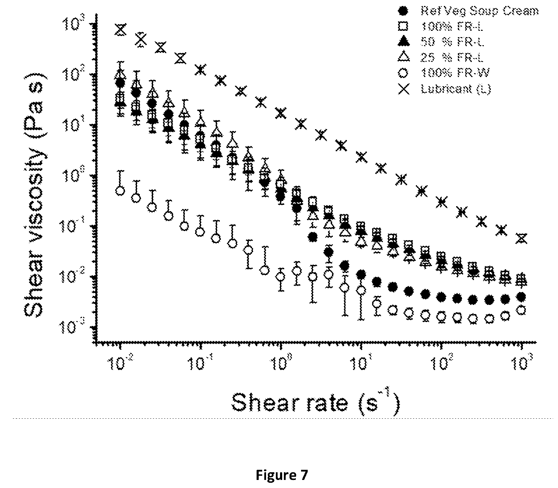

To evaluate the fluidity of the vegetable soup made with double cream recipes under relevant oral conditions, their apparent viscosity at an orally relevant shear rate (50 s$^{-1}$) was compared (Figure 7).

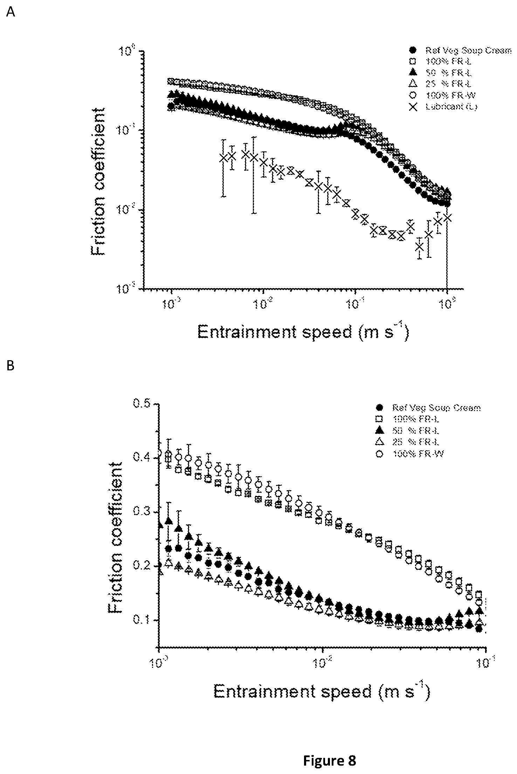

Figure 8 shows the lubrication performance of the vegetable soup made with double cream recipes under relevant oral conditions, represented by the friction coefficient as a function of entrainment speeds.

Example 6: Pea protein liquid emulsions

In this example, the reference pea protein liquid emulsion has a fat content of 8 wt%, and the fat replacement levels tested are 50% and 100%. The recipes are described in Table 8 below.

For each recipe, the ingredients were pre-sheared at 8,000 rpm using a rotor-stator type mixer (Silverson Shear Mixer, L5M-A, UK) for 5 min. To create fine emulsions, these pre-homogenized coarse emulsions were then passed through the Panda homogenizer at 250/ 50 bar pressure three times.

*Table 8*

| | Ingredient percentage in each recipe (wt%) | | | |
|---|---|---|---|---|
| **Recipe** | **Ref Pea protein liquid emulsions** | **50% FR-L** | **100% FR-L** | **100% FR-W** |
| Fat replacement | 0% fat replaced (reference made | 50% fat replaced with the present | 100% fat replaced with the present invention | 100% fat replaced with water |
| | from natural food fat) | invention (lubricant, Example 1) | (lubricant, Example 1) | |
| Water | 90 | 90 | 90 | 98 |
| Sugar | 1 | 1 | 1 | 1 |
| Sunflower oil | 8 | 4 | | |
| Present invention (lubricant, Example 1) | | 4 | 8 | |
| Pea protein concentrate (85% protein) | 1 | 1 | 1 | 1 |

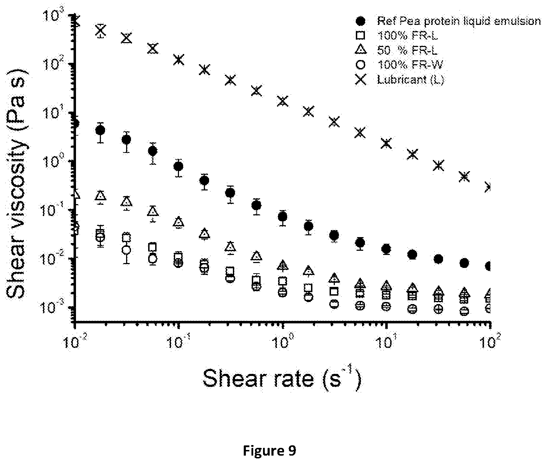

To evaluate the fluidity of the pea protein liquid emulsion recipes under relevant oral conditions, their apparent viscosity at an orally relevant shear rate (50 s$^{-1}$) was compared (Figure 9).

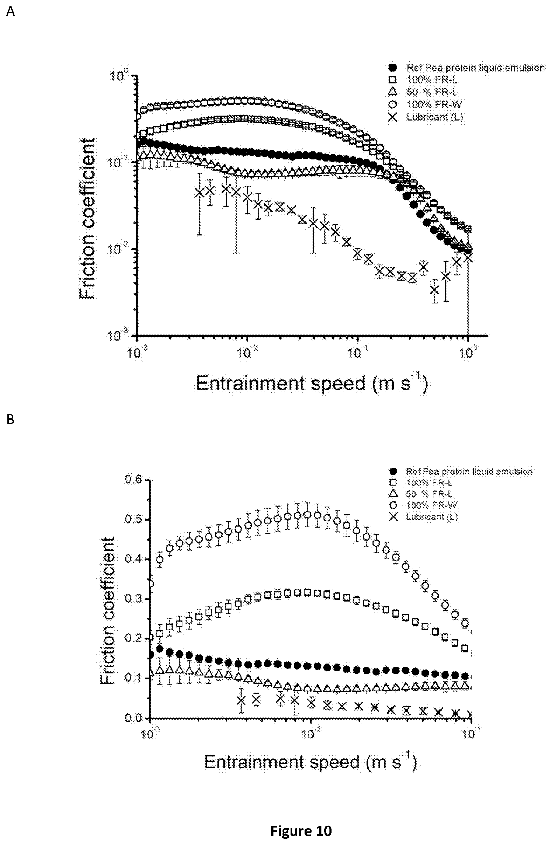

Figure 10 shows the lubrication performance of the pea protein liquid emulsion recipes under relevant oral conditions, represented by the friction coefficient as a function of entrainment speeds.

**Claims**

1. A food product comprising an oil-free additive formulation, the oil-free additive formulation comprising:

   (i) a proteinaceous microgel; and
   (ii) a biopolymeric hydrogel;

   wherein either one of: (i) the proteinaceous microgel; and (ii) the biopolymeric hydrogel is positively charged, and the other is negatively charged;
   wherein the biopolymeric hydrogel is associated with an outer surface of the oppositely charged proteinaceous microgel; and

wherein the food product is selected from:

(A) roux, dressings, sauces, soup, dips, broths, gravies, liquid and thickened suspensions; and comprises the oil-free additive formulation in a concentration of from about 0.01% to less than 5% by weight; or
(B) milk, yoghurt, yoghurt drinks, milk- or yoghurt-based smoothies, pasteurized UHT milk, sweet condensed milk, evaporated milk, fermented milks, milk-based fermented products, and infant formula containing milk fat; and comprises the additive formulation in a concentration of from about 0.01% to less than 3.5%.

2. The food product of claim 1, wherein the proteinaceous microgel is positively charged and the biopolymeric hydrogel is negatively charged.

3. The food product of any preceding claim, wherein the weight ratio of biopolymeric hydrogel to proteinaceous microgel is from about 0.1:1 to about 10:1.

4. The food product of claim 3, wherein the weight ratio of biopolymeric hydrogel to microgel is from about 0.2:1 to about 3:1.

5. The food product of any preceding claim, wherein the proteinaceous microgel is selected from the group consisting of: lactoferrin, lysozyme, gelatin, milk protein, bovine serum albumin, whey protein, casein, caseinate, egg protein, albumin, gluten, gelatin Type B, pea protein, rice protein, lupin, soy protein, wheat protein, millet protein, legume, legumin, gluten, corn protein, zein, peanut protein, almond protein, pistachio protein, cashew nut protein, walnut protein, hazelnut protein, pine nut protein, coconut protein, potato protein, insect protein, algal protein, microbial protein, spirulina, fungal protein (mycoprotein), single cell protein, leaf protein, mung bean protein, faba bean protein, red kidney bean protein, tomato seed protein, pumpkin seed protein, flax seed protein, chick pea protein, hemp protein, sunflower protein, rapeseed protein, quinoa protein, amaranth protein, oat protein, barley protein, rye protein, sorghum protein and sesame protein in the form of isolates, concentrates or hydrolysates.

6. The food product of claim 5, wherein the proteinaceous microgel is a potato protein microgel.

7. The food product of any preceding claim, wherein the biopolymeric hydrogel is a polysaccharide-based hydrogel.

8. The food product of claim 7, wherein the biopolymeric hydrogel is selected from the group consisting of: κ-carrageenan, I-carrageenan, λ-carrageenan, agar, agarose, alginate, pectin, dextran sulphate, cellulose and modified cellulose (ethyl cellulose, microcrystalline cellulose, carboxymethylcellulose, methylcellulose, hydroxypropylmethylcellulose), locust bean gum, gum Arabic, gum ghatti, konjac gum, Karaya gum, Cassia gum, xanthan gum, gellan gum, modified starches, and any negatively charged polysaccharide. In a preferred embodiment, the biopolymeric hydrogel is xanthan gum.

9. The food product of claim 8, wherein the biopolymeric hydrogel is xanthan gum.

10. The food product of any preceding claim, wherein the biopolymeric hydrogel is associated with an outer surface of the proteinaceous microgel by an electrostatic interaction;
or wherein the biopolymeric hydrogel associated with the outer surface of the proteinaceous microgel result in an outer surface that has an overall negative charge.

11. The food product of any preceding claim, wherein the food product has a pH of from about 2 to about 7.

12. The food product of any preceding claim, wherein the food product has a pH of from about 2 to about 4.8.

13. A method for preparing a food product of any of claims 1 to 12, the method comprising:

(a) dissolving a proteinaceous material in a buffer solution and heating the resulting solution to form a proteinaceous microgel or a heat-set gel;
(b) when step (a) results in a heat-set gel, mixing the heat-set gel with the buffer solution and homogenising to form a proteinaceous microgel;

(c) adding the proteinaceous microgel of step (a) or step (b) to a solution of the biopolymeric hydrogel to form the additive formulation; and

(d) adding the oil-free additive formulation to a base food to provide the food product of any of claims 1 to 12, wherein either one of: (i) the proteinaceous microgel; and (ii) the biopolymeric hydrogel is positively charged, and the other is negatively charged;

wherein the resulting formulation has the biopolymeric hydrogel associated with an outer surface of the proteinaceous microgel; and

wherein the food product is selected from:

(A) roux, dressings, sauces, soup, dips, broths, gravies, liquid and thickened suspensions; and the concentration of additive formulation in the food product is from about 0.01% to less than 5% by weight of the food product; or

(B) milk, yoghurt, yoghurt drinks, milk- or yoghurt-based smoothies, pasteurized UHT milk, sweet condensed milk, evaporated milk, fermented milks, milk-based fermented products, and infant formula containing milk fat; and concentration of additive formulation in the food product is from about 0.01% to less than 3.5% by weight of the food product.

14. A use of an oil-free additive formulation as a fat replacement in a food product, in a concentration of from about 0.01% to less than 5% by weight of the food product, the oil-free additive formulation comprising:

a proteinaceous microgel; and
a biopolymeric hydrogel;

wherein either one of: (i) the proteinaceous microgel; and (ii) the biopolymeric hydrogel is positively charged, and the other is negatively charged; wherein the biopolymeric hydrogel is associated with an outer surface of the oppositely charged proteinaceous microgel.

**Patentansprüche**

1. Nahrungsmittelprodukt, umfassend eine ölfreie Additivformulierung, wobei die ölfreie Additivformulierung Folgendes umfasst:

(i) ein proteinhaltiges Mikrogel; und
(ii) ein biopolymeres Hydrogel;

wobei eines von: (i) dem proteinhaltigen Mikrogel; und (ii) dem biopolymeren Hydrogel positiv geladen ist und das andere negativ geladen ist;

wobei das biopolymere Hydrogel mit einer Außenfläche des entgegengesetzt geladenen proteinhaltigen Mikrogels assoziiert ist; und

wobei das Nahrungsmittelprodukt ausgewählt ist aus:

(A) Roux, Dressings, Saucen, Suppe, Dips, Brühen, Soßen, flüssigen und verdickten Suspensionen; und die ölfreie Additivformulierung in einer Konzentration von etwa 0,01 Gewichts-% bis weniger als 5 Gewicht-% umfasst; oder

(B) Milch, Joghurt, Joghurtgetränken, Smoothies auf Milch- oder Joghurtbasis, pasteurisierter UHT-Milch, süßer Kondensmilch, eingedickter Milch, fermentierter Milch, fermentierten Produkten auf Milchbasis und Säuglingsnahrung, die Milchfett enthält; und die Additivformulierung in einer Konzentration von etwa 0,01 % bis weniger als 3,5 % umfasst.

2. Nahrungsmittelprodukt nach Anspruch 1, wobei das proteinhaltige Mikrogel positiv geladen ist und das biopolymere Hydrogel negativ geladen ist.

3. Nahrungsmittelprodukt nach einem vorhergehenden Anspruch, wobei das Gewichtsverhältnis von biopolymerem Hydrogel zu proteinhaltigem Mikrogel von etwa 0,1:1 bis etwa 10:1 ist.

4. Nahrungsmittelprodukt nach Anspruch 3, wobei das Gewichtsverhältnis von biopolymerem Hydrogel zu Mikrogel von etwa 0,2:1 bis etwa 3:1 ist.

5. Nahrungsmittelprodukt nach einem vorhergehenden Anspruch, wobei das proteinhaltige Mikrogel ausgewählt ist aus der Gruppe bestehend aus: Lactoferrin, Lysozym, Gelatine, Milchprotein, Rinderserumalbumin, Molkenprotein, Kasein, Kaseinat, Eiprotein, Albumin, Gluten, Gelatine Typ B, Erbsenprotein, Reisprotein, Lupine, Sojaprotein, Weizenprotein, Hirseprotein, Hülsenfrucht, Leguminose, Gluten, Maisprotein, Zein, Erdnussprotein, Mandelprotein, Pistazienprotein, Cashewnussprotein, Walnussprotein, Haselnussprotein, Kiefernussprotein, Kokosnussprotein, Kartoffelprotein, Insektenprotein, Algenprotein, mikrobiellem Protein, Spirulina, Pilzprotein (Mykoprotein), Einzelzellprotein, Blattprotein, Mungobohnenprotein, Ackerbohnenprotein, rotem Kidneybohnenprotein, Tomatensamenprotein, Kürbissamenprotein, Leinsamenprotein, Kichererbsenprotein, Hanfprotein, Sonnenblumenprotein, Rapsprotein, Quinoaprotein, Amaranth-Protein, Haferprotein, Gerstenprotein, Roggenprotein, Sorghumprotein und Sesamprotein in der Form von Isolaten, Konzentraten oder Hydrolysaten.

6. Nahrungsmittelprodukt nach Anspruch 5, wobei das proteinhaltige Mikrogel ein Kartoffelproteinmikrogel ist.

7. Nahrungsmittelprodukt nach einem vorhergehenden Anspruch, wobei das biopolymere Hydrogel ein Hydrogel auf Polysaccharidbasis ist.

8. Nahrungsmittelprodukt nach Anspruch 7, wobei das biopolymere Hydrogel ausgewählt ist aus der Gruppe bestehend

aus: κ-Carrageen, ι-Carrageen, λ-Carrageen, Agar, Agarose, Alginat, Pektin, Dextransulfat, Cellulose und modifizierter Cellulose (Ethylcellulose, mikrokristalliner Cellulose, Carboxymethylcellulose, Methylcellulose, Hydroxypropylmethylcellulose), Johannisbrotkernmehl, Gummi Arabicum, Gummi Ghatti, Konjakgummi, Karayagummi, Cassia-Gummi, Xanthangummi, Gellangummi, modifizierten Stärken und einem beliebigen negativ geladenen Polysaccharid. In einer bevorzugten Ausführungsform ist das biopolymere Hydrogel Xanthangummi.

9. Nahrungsmittelprodukt nach Anspruch 8, wobei das biopolymere Hydrogel Xanthangummi ist.

10. Nahrungsmittelprodukt nach einem vorhergehenden Anspruch, wobei das biopolymere Hydrogel mit einer Außenfläche des proteinhaltigen Mikrogels durch eine elektrostatische Wechselwirkung assoziiert ist;
oder wobei das biopolymere Hydrogel assoziiert mit der Außenfläche des proteinhaltigen Mikrogels in einer Außenfläche resultiert, die eine insgesamt negative Ladung aufweist.

11. Nahrungsmittelprodukt nach einem vorhergehenden Anspruch, wobei das Nahrungsmittelprodukt einen pH von etwa 2 bis etwa 7 aufweist.

12. Nahrungsmittelprodukt nach einem vorhergehenden Anspruch, wobei das Nahrungsmittelprodukt einen pH von etwa 2 bis etwa 4,8 aufweist.

13. Verfahren zum Herstellen eines Nahrungsmittelprodukts nach einem der Ansprüche 1 bis 12, wobei das Verfahren Folgendes umfasst:

(a) Auflösen eines proteinhaltigen Materials in einer Pufferlösung und Erwärmen der resultierenden Lösung, um ein proteinhaltiges Mikrogel oder ein thermofixiertes Gel zu bilden;
(b) wenn Schritt (a) in einem thermofixierten Gel resultiert, Mischen des thermofixierten Gels mit der Pufferlösung und Homogenisieren, um ein proteinhaltiges Mikrogel zu bilden;
(c) Hinzufügen des proteinhaltigen Mikrogels aus Schritt (a) oder Schritt (b) zu einer Lösung des biopolymeren Hydrogels, um die Additivformulierung zu bilden; und
(d) Hinzufügen der ölfreien Additivformulierung zu einem Grundnahrungsmittel, um das Nahrungsmittelprodukt nach einem der Ansprüche 1 bis 12 bereitzustellen,

wobei eines von: (i) dem proteinhaltigen Mikrogel; und (ii) dem biopolymeren Hydrogel positiv geladen ist und das andere negativ geladen ist;
wobei die resultierende Formulierung das biopolymere Hydrogel assoziiert mit einer Außenfläche des proteinhaltigen Mikrogels aufweist; und
wobei das Nahrungsmittelprodukt ausgewählt ist aus:

(A) Roux, Dressings, Saucen, Suppe, Dips, Brühen, Soßen, flüssigen und verdickten Suspensionen; und die Konzentration der Additivformulierung in dem Nahrungsmittelprodukt von etwa 0,01 Gewichts-% bis weniger als 5 Gewicht-% des Nahrungsmittelprodukts ist; oder

(B) Milch, Joghurt, Joghurtgetränken, Smoothies auf Milch- oder Joghurtbasis, pasteurisierter UHT-Milch, süßer Kondensmilch, eingedickter Milch, fermentierter Milch, fermentierten Produkten auf Milchbasis und Säuglingsnahrung, die Milchfett enthält; und Konzentration der Additivformulierung in dem Nahrungsmittelprodukt etwa 0,01 Gewichts-% bis weniger als 3,5 Gewichts-% des Nahrungsmittelprodukts ist.

14. Verwendung einer ölfreien Additivformulierung als Fettersatz in einem Nahrungsmittelprodukt in einer Konzentration von etwa 0,01 Gewichts-% bis weniger als 5 Gewicht-% des Nahrungsmittelprodukts, wobei die ölfreie Additivformulierung Folgendes umfasst:

ein proteinhaltiges Mikrogel; und
ein biopolymeres Hydrogel;
wobei eines von: (i) dem proteinhaltigen Mikrogel; und (ii) dem biopolymeren Hydrogel positiv geladen ist und das andere negativ geladen ist; wobei das biopolymere Hydrogel mit einer Außenfläche des entgegengesetzt geladenen proteinhaltigen Mikrogels assoziiert ist.

## Revendications

1. Produit alimentaire comprenant une formulation d'additif sans huile, la formulation d'additif sans huile comprenant :

(i) un microgel protéique ; et
(ii) un hydrogel biopolymérique ;

dans lequel l'un ou l'autre entre : (i) le microgel protéique ; et (ii) l'hydrogel biopolymérique est chargé positivement, et l'autre est chargé négativement ;
dans lequel l'hydrogel biopolymérique est associé à une surface externe du microgel protéique chargé de manière opposée ; et
dans lequel le produit alimentaire est choisi parmi :

(A) roux, vinaigrettes, sauces, soupes, sauces à tremper, bouillons, sauces brunes, suspensions liquides et épaissies ; et comprend la formulation d'additif sans huile en une concentration d'environ 0,01 % à moins de 5 % en poids ; ou
(B) lait, yaourt, boissons à base de yaourt, smoothies à base de lait ou de yaourt, lait UHT pasteurisé, lait concentré sucré, lait concentré, laits fermentés, produits fermentés à base de lait et préparations pour nourrissons contenant de la graisse de lait ; et comprend la formulation additive en une concentration d'environ 0,01 % à moins de 3,5 %.

2. Produit alimentaire de la revendication 1, dans lequel le microgel protéique est chargé positivement et l'hydrogel biopolymérique est chargé négativement.

3. Produit alimentaire de l'une quelconque des revendications précédentes, dans lequel le rapport pondéral de l'hydrogel biopolymérique au microgel protéique est d'environ 0,1:1 à environ 10:1.

4. Produit alimentaire de la revendication 3, dans lequel le rapport pondéral de l'hydrogel biopolymérique au microgel est d'environ 0,2:1 à environ 3:1.

5. Produit alimentaire de l'une quelconque des revendications précédentes, dans lequel le microgel protéique est choisi dans le groupe constitué par : lactoferrine, lysozyme, gélatine, protéine de lait, sérum-albumine bovine, protéine de lactosérum, caséine, caséinate, protéine d'œuf, albumine, gluten, gélatine de type B, protéine de pois, protéine de riz, lupin, protéine de soja, protéine de blé, protéine de millet, légumineuse, légumine, gluten, protéine de maïs, zéine, protéine d'arachide, protéine d'amande, protéine de pistache, protéine de noix de cajou, protéine de noix, protéine de noisette, protéine de pignon, protéine de noix de coco, protéine de pomme de terre, protéine d'insecte, protéine d'algues, protéine microbienne, spiruline, protéine fongique (mycoprotéine), protéine unicellulaire, protéine de feuille, protéine de haricot mungo, protéine de féverole, protéine de haricot rouge, protéine de graine de tomate, protéine de graine de citrouille, protéine de graine de lin, protéine de pois chiche, protéine de chanvre, protéine de tournesol, protéine de colza, protéine de quinoa, protéine d'amarante, protéine d'avoine, protéine d'orge, protéine de seigle, protéine de sorgho et protéine de sésame sous forme d'isolats, de concentrés ou d'hydrolysats.

6. Produit alimentaire de la revendication 5, dans lequel le microgel protéique est un microgel protéique de pomme de terre.

7. Produit alimentaire de l'une quelconque des revendications précédentes, dans lequel l'hydrogel biopolymérique est un hydrogel à base de polysaccharide.

8. Produit alimentaire de la revendication 7, dans lequel l'hydrogel biopolymère est choisi dans le groupe constitué par :

κ-carraghénane, ɩ-carraghénane, λ-carraghénane, gélose, agarose, alginate, pectine, sulfate de dextrane, cellulose et cellulose modifiée (éthylcellulose, cellulose microcristalline, carboxyméthylcellulose, méthylcellulose, hydroxypropylméthylcellulose), gomme de caroube, gomme arabique, gomme ghatti, gomme de konjac, gomme de Karaya, gomme de Cassia, gomme de xanthane, gomme de gellane, amidons modifiés et tout polysaccharide chargé négativement. Dans un mode de réalisation préféré, l'hydrogel biopolymérique est de la gomme de xanthane.

9. Produit alimentaire de la revendication 8, dans lequel l'hydrogel biopolymérique est de la gomme de xanthane.

10. Produit alimentaire de l'une quelconque des revendications précédentes, dans lequel l'hydrogel biopolymérique est associé à une surface externe du microgel protéique par une interaction électrostatique ;
ou dans lequel l'hydrogel biopolymérique associé à la surface externe du microgel protéique entraîne une surface externe qui a une charge négative globale.

11. Produit alimentaire de l'une quelconque des revendications précédentes, dans lequel le produit alimentaire a un pH d'environ 2 à environ 7.

12. Produit alimentaire de l'une quelconque des revendications précédentes, dans lequel le produit alimentaire a un pH d'environ 2 à environ 4,8.

13. Procédé permettant la préparation d'un produit alimentaire selon l'une quelconque des revendications 1 à 12, le procédé comprenant :

(a) la dissolution d'un matériau protéique dans une solution tampon et la chauffe de la solution résultante pour former un microgel protéique ou un gel thermodurcissable ;
(b) lorsque l'étape (a) aboutit à un gel thermodurci, le mélange du gel thermodurci avec la solution tampon et l'homogénéisation pour former un microgel protéique ;
(c) l'ajout du microgel protéique de l'étape (a) ou de l'étape (b) à une solution de l'hydrogel biopolymérique pour former la formulation additive ; et
(d) l'ajout de la formulation d'additif sans huile à un aliment de base pour fournir le produit alimentaire selon l'une quelconque des revendications 1 à 12,

dans lequel l'un ou l'autre parmi : (i) le microgel protéique ; et (ii) l'hydrogel biopolymérique est chargé positivement, et l'autre est chargé négativement ;
dans lequel la formulation résultante a l'hydrogel biopolymérique associé à une surface externe du microgel protéique ; et
dans lequel le produit alimentaire est choisi parmi :

(A) roux, vinaigrettes, sauces, soupes, sauces à tremper, bouillons, sauces brunes, suspensions liquides et épaissies ; et la concentration de la formulation d'additif dans le produit alimentaire est d'environ 0,01 % à moins de 5 % en poids du produit alimentaire ; ou
(B) lait, yaourt, boissons à base de yaourt, smoothies à base de lait ou de yaourt, lait UHT pasteurisé, lait concentré sucré, lait concentré, laits fermentés, produits fermentés à base de lait et préparations pour nourrissons contenant de la graisse de lait ; et la concentration de la formulation additive dans le produit alimentaire est d'environ 0,01 % à moins de 3,5 % en poids du produit alimentaire.

14. Utilisation d'une formulation d'additif sans huile comme substitut de graisse dans un produit alimentaire, en une concentration d'environ 0,01 % à moins de 5 % en poids du produit alimentaire, la formulation d'additif sans huile comprenant :

un microgel protéique ; et

un hydrogel biopolymérique ;

dans lequel l'un ou l'autre entre : (i) le microgel protéique ; et (ii) l'hydrogel biopolymérique est chargé positivement, et l'autre est chargé négativement ; dans lequel l'hydrogel biopolymérique est associé à une surface extérieure du microgel protéique chargé de manière opposée.

**Figure 1**

A

B

Figure 2

**Figure 3**

A

B

**Figure 4**

Figure 5

A

B

Figure 6

Figure 7

A

B

Figure 8

Figure 9

A

B

Figure 10

Figure 11

**Figure 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0630580 A

- WO 2021234386 A1

### Non-patent literature cited in the description

- **KEW, B.** ; **HOLMES, M.** ; **STIEGER, M.** ; **SARKAR, A.** Review on fat replacement using protein-based microparticulated powders or microgels: A textural perspective.. *Trends in Food Science & Technology*, 2020, vol. 106, 457-468
- **TIANQI FANG** ; **XUE SHEN** ; **JUNCAI HOU** ; **MINGRUO GUO**. Effects of polymerized whey protein prepared directly from cheese whey as fat replacer on physiochemical, texture, microstructure and sensory properties of low-fat set yogurt. *LWT*, 2019, vol. 115, 108268
- **FRANCES N. BROWN** ; **ALAN R. MACKIE** ; **QI HE** ; **ALISON BRANCH** ; **ANWESHA SARKAR**. *Food Funct.*, 2021, vol. 12, 3324-3351
- **LAGUNA, L.** ; **FARRELL, G.** ; **BRYANT, M.** ; **MORINA, A.** ; **SARKAR, A.** Relating rheology and tribology of commercial dairy colloids to sensory perception.. *Food & Function*, 2017, vol. 8 (2), 563-573
- **TORRES, I. C.** ; **AMIGO, J. M.** ; **KNUDSEN, J. C.** ; **TOLKACH, A.** ; **MIKKELSEN, B. Ø.** ; **IPSEN, R.** Rheology and microstructure of low-fat yoghurt produced with whey protein microparticles as fat replacer.. *International Dairy Journal*, 2018, vol. 81, 62-71

- **CARVALHO DA SILVA**. *Food Technol Biotechnol.*, 2022, vol. 60 (3), 308-320
- **FÄLDT** ; **BERGENSTÅHL**. *Food Hydrocolloids*, 1996, vol. 10 (4), 431-439
- **MILLQVIST-FUREBY et al.** *Colloids Surf B: Biointerfaces*, 2001, vol. 21 (1-3), 47-58
- **GRANELLI et al.** *Journal of Science of Food and Agriculture*, 1996, vol. 71 (1), 75-82
- **NIJDAM et al.** *Journal of Food Engineering*, 2006, vol. 77 (4), 919-925
- **LEE et al.** *Journal of Food and Drug Analysis*, 2018, vol. 26 (2), 469-480
- **ANGES TEO** ; **SUNG JE LEE** ; **KELVIN K. T. GOH**. *Food Structure*, 2017, vol. 14, 60-67
- **ANWESHA SARKAR** ; **KELVIN K.T. GOH** ; **HARJINDER SINGH**. *Food Hydrocolloids*, 2009, vol. 23, 1270-1278
- **S. PALLANDRE** ; **E. A. DECKER** ; **D. J. MCCLEMENTS**. *Journal of Food Science*, 2007, vol. 72, E518-E524
- **DEMET GUZEY** ; **DAVID JULIAN MCCLEMENTS**. *J. Agric. Food Chem.*, 2007, vol. 55, 475-485